(19) Europäisches Patentamt
European Patent Office
Office européen des brevets

(11) EP 1 136 542 A1

(12) **EUROPEAN PATENT APPLICATION**
published in accordance with Art. 158(3) EPC

(43) Date of publication:
**26.09.2001 Bulletin 2001/39**

(21) Application number: **99954414.1**

(22) Date of filing: **05.11.1999**

(51) Int Cl.[7]: **C10J 3/00**, H01M 8/06

(86) International application number:
**PCT/JP99/06185**

(87) International publication number:
**WO 00/27951 (18.05.2000 Gazette 2000/20)**

(84) Designated Contracting States:
**AT BE CH CY DE DK ES FI FR GB GR IE IT LI LU MC NL PT SE**
Designated Extension States:
**AL LT LV MK RO SI**

(30) Priority: **05.11.1998 JP 33016198**

(71) Applicant: **EBARA CORPORATION**
**Ohta-ku, Tokyo 144-8510 (JP)**

(72) Inventors:
- **FUJIMURA, Hiroyuki Ebara Corporation Ohta-ku Tokyo 144-8510 (JP)**
- **OSHITA, Takahiro Ebara Corporation Ohta-ku Tokyo 144-8510 (JP)**
- **HIROSE, Tetsuhisa Ebara Corporation Ohta-ku Tokyo 144-8510 (JP)**
- **MIYOSHI, Norihisa Ebara Corporation Ohta-ku Tokyo 144-8510 (JP)**
- **NARUSE, Katsutoshi Ebara Corporation Ohta-ku Tokyo 144-8510 (JP)**
- **HAYAKAWA, Junichi Ebara Corporation Ohta-ku Tokyo 144-8510 (JP)**

(74) Representative: **Wagner, Karl H., Dipl.-Ing.**
**Wagner & Geyer,**
**Patentanwälte,**
**Gewürzmühlstrasse 5**
**80538 München (DE)**

# (54) POWER GENERATION SYSTEM BASED ON GASIFICATION OF COMBUSTIBLE MATERIAL

(57) A low-temperature gasification furnace (2) is provided to gasify combustibles such as combustible wastes or coal at a predetermined temperature, for example, 400 to 1000°C, and the produced gas is then supplied to a fuel cell (6) to generate electricity. The low-temperature gasification furnace preferably comprises a fluidized-bed gasification furnace.

*FIG.1*

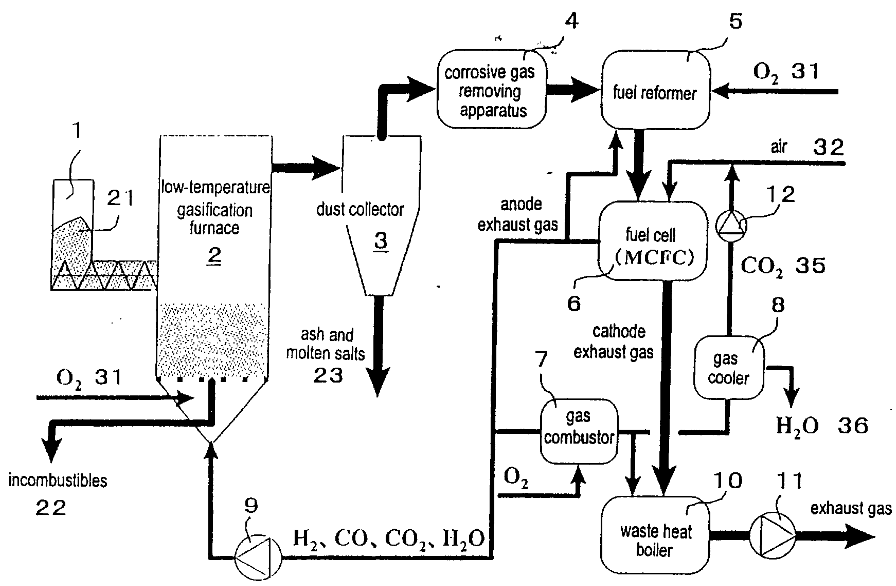




Printed by Jouve, 75001 PARIS (FR)

## Description

### Technical Field

The present invention relates to a technology for converting chemical energy of combustibles to electric energy with high efficiency, and more particularly to an electric generating system in which combustibles such as combustible wastes or coal are gasified to produce gas and the produced gas is utilized as a fuel gas in a fuel cell to generate electricity. Here, combustible wastes include municipal wastes, refuse-derived fuel, solid-water mixture, plastic wastes, waste FRP, biomass wastes, automobile wastes, industrial wastes such as waste wood, low-grade coal, and waste oil.

### Background Art

In recent years, various attempts have been made to convert chemical energy of combustibles such as coal to electricity. One of the attempts is to employ a combined-cycle electric generating system in which combustibles are gasified under pressure to produce gas, the produced gas is used to drive a gas turbine, and a heat of exhaust gas discharged from the gas turbine is recovered by a waste heat boiler to drive a steam turbine, and thus the gas turbine and the steam turbine are used in combination to perform combined-cycle power generation for thereby generating electricity with high efficiency.

However, in the above combined-cycle electric generating system, a high calorific gas on a revel with natural gas should be produced to drive the existing gas turbine. That is, the existing gas turbine cannot be driven by a low calorific gas produced by gasification of combustibles having a low calorific value, for example, combustible wastes such as municipal wastes. Thus, in order to produce a high calorific gas, it has been necessary to take some measures such as preventing dilution of the produced gas with nitrogen contained in air by the use of pure oxygen in place of air as a gasifying agent. As for combustibles having a high fixed carbon content such as coal, it has been necessary to gasify the fixed carbon completely by raising the gasification temperature as being performed in IGCC (integrated gasification combined cycle).

Recently, there has been being developed a gas turbine for low calorific gas. However, an attempt to raise the temperature of gas introduced into the inlet of the gas turbine for the purpose of high efficiency requires cooling air for cooling components, such as a turbine blade, which are exposed to high temperature. In case of low calorific gas, if excess air ratio is large, then the temperature of combustion gas is lowered. Therefore, the excess air ratio has to be limited, and thus the development of the gas turbine for a low calorific gas makes no progress due to shortage of the amount of cooling air under the present circumstances.

If oxygen is used to produce a high calorific gas, energy for producing oxygen is required. If the gasification reaction temperature is raised for the purpose of complete gasification, the extra heat corresponding to its sensible heat is necessary to thus increase the oxygen ratio, thus causing a problem of lowered cold gas efficiency. In addition, due to the restriction of the temperature of gas in supplying the gas into electric generating equipment, gas which has once been raised to a high temperature has to be cooled, thus disadvantageously increasing the sensible heat loss. For the above reason, the efficiency in terms of overall efficiency cannot be necessarily improved. The term "cold gas efficiency" as used herein refers to a value obtained by dividing the total calorific value of the produced combustible gas by the total calorific value of the supplied raw material.

### Disclosure of Invention

Under these circumstances, the present inventors have made the present invention which can generate electricity with high efficiency by the use of combustibles having a low calorific value as a raw material and can enrich and separate generated carbon dioxide to suppress global warming by combining optimally a technique for converting even a low calorific gas to electricity with high efficiency, a technique for producing gas stably from various combustibles, and a technique for removing components poisonous to a fuel cell from the produced gas.

Accordingly, it is an object of the present invention to provide an electric generating system by gasification of combustibles in which combustibles such as combustible wastes or coal are gasified to produce gas, and the produced gas is utilized in a chemical reaction to generate electricity with high efficiency.

It is another object of the present invention to provide an electric generating system by gasification of combustibles in which combustibles such as combustible wastes or coal are stably gasified in a low-temperature gasification furnace to produce gas, components poisonous to a fuel cell are removed from the produced gas, and the purified gas is introduced into a fuel cell to generate electricity with high efficiency.

In order to achieve the above objects, according to one aspect of the present invention, there is provided an electric generating system by gasification of combustibles, characterized in that combustibles are gasified to produce gas, and the produced gas is then used in a chemical reaction to generate electricity.

According to another aspect of the present invention, there is provided an electric generating system by gasification of combustibles, characterized in that combustibles are gasified to produce gas, and the produced gas is then used in a fuel cell to generate electricity.

According to still another aspect of the present invention, there is provided an electric generating system by gasification of combustibles, characterized in that combustibles are gasified in a fluidized-bed furnace to produce gas, and the produced gas is then used in a fuel cell to generate electricity.

According to another aspect of the present invention, there is provided an electric generating system by gasification of combustibles, characterized in that combustibles are gasified to produce gas, and the produced gas is reformed, and the reformed gas is then used in a fuel cell to generate electricity.

According to another aspect of the present invention, there is provided an electric generating system by gasification of combustibles, characterized in that combustibles are gasified to produce gas, and the produced gas is then used in a fuel cell to generate electricity, while waste heat produced in the fuel cell is used as a heat source for the gasification.

According to another aspect of the present invention, there is provided an electric generating system by gasification of combustibles, characterized in that combustibles are gasified to produce gas, and the produced gas is used in a fuel cell to generate electricity, while exhaust gas discharged from the fuel cell is introduced into the gasification process to utilize the exhaust gas for the gasification.

According to another aspect of the present invention, there is provided an electric generating system by gasification of combustibles, characterized in that combustibles are gasified in an integrated type fluidized-bed gasification furnace having a gasification chamber, a char combustion chamber, and a heat recovery chamber in one furnace to produce gas, and the produced gas is then used in a fuel cell to generate electricity.

According to another aspect of the present invention, there is provided an electric generating system by gasification of combustibles, characterized in that a low-temperature gasification furnace for gasifying combustibles at a temperature of 400 to 1000°C is provided, and the gas produced in the low-temperature gasification furnace is supplied to electric generating equipment to generate electricity, while exhaust gas containing a large amount of steam after power generation is utilized as a gasifying agent in the low-temperature gasification furnace. According to a preferred aspect of the present invention, the electric generating equipment is a fuel cell.

In recent years, fuel cells have been rapidly being developed as a technique for converting chemical energy directly into electric energy without a process of conversion to thermal energy. Fuel cells are classified roughly into four types, from highest operating temperature to lowest operating temperature, solid electrolyte fuel cell (SOFC), molten carbonate fuel cell (MCFC), phosphoric acid fuel cell (PAFC), and polymer electrolyte fuel cell (PEFC). The phosphoric acid fuel cell and the polymer electrolyte fuel cell require pure hydrogen gas as a fuel gas. On the other hand, the solid electrolyte fuel cell and the molten carbonate fuel cell have a high reaction temperature and require no precious metal catalyst, and hence have a great feature that not only hydrogen gas but also carbon monoxide, which is poisonous to the catalyst, can be used as the fuel.

Further, fuel cells have a great feature that only a fuel component gas in a mixed gas can be selectively reacted. For example, even if fuel gas such as hydrogen or carbon monoxide is mixed with gas, other than the fuel gas, such as nitrogen, carbon dioxide or steam, only the gas components usable as the fuel in the mixed gas are reacted with oxygen to generate electricity. Therefore, electricity can be generated from a mixed gas with high efficiency without use of any special gas separation technique.

For example, when coal or organic wastes are gasified by air to produce gas, and the produced gas is used to drive a gas turbine to generate electricity, since nitrogen derived from air is contained in the produced gas, an attempt to produce high-temperature combustion gas requires extra heat corresponding to the sensible heat necessary for raising the temperature of nitrogen gas. Theoretically, when the calorific value of the produced gas is 3.35 MJ/$m^3$ (NTP) (800 kcal/$Nm^3$), the combustion gas temperature is about 1500°C, while when the calorific value of the produced gas is 2.51 MJ/$m^3$ (NTP) (600 kcal/$Nm^3$), the combustion gas temperature is about 1200°C. In reality, however, it is difficult to realize stable combustion unless the calorific value of the produced gas exceeds 4.19 MJ/$m^3$ (NTP) (1000 kcal/$Nm^3$), and high temperature combustion poses a problem of generation of thermal NOx. Thus, it is very difficult to generate electricity with high efficiency by combustion of gas containing a large amount of nitrogen therein.

On the other hand, when the same type of gas is used to generate electricity in a fuel cell, the inclusion of nitrogen gas in the produced gas, i.e., fuel gas, has some adverse effect such as a reduction in frequency of contact of the fuel gas component with the electrode, but this adverse effect is much smaller than the adverse effect in the case of the power generation by the gas turbine.

When low calorific combustibles, such as municipal wastes, having a calorific value of about 8.37 to 12.56 MJ/kg (2000 to 3000 kcal/kg) are gasified to generate electricity, it is important to enhance cold gas efficiency as much as possible. In a gasification and slagging combustion technology for waste treatment which is under development, in some cases, an indirect heating method such as external heating is adopted in a pyrolysis furnace. This is exactly "for the sake of avoiding partial combustion and enhancing cold gas efficiency with a limited oxygen ratio." The most effective method for enhancing cold gas efficiency is to prevent the generation of useless heat. Particularly, lowering of the gasification temperature as much as possible is effective. When the gasification temperature can be lowered, both the amount of the consumed combustible material to generate heat for raising the temperature and the oxygen consumption can be reduced. This can enhance the cold gas efficiency, and even when pure oxygen is used as an oxidizing agent, energy involved in the production of oxygen can be reduced, and hence sending-end efficiency is improved.

The adoption of low gasification temperature is also advantageous in furnace material. In a complete gasification process for coal (IGCC) which is currently under development, the maximum temperature of the gasification furnace is as high as 1500°C or higher. Therefore, it is very difficult to select a refractory material which can withstand this high temperature. At the present time, there is no refractory material which can withstand this temperature and service condition, and hence the refractory material is externally cooled to prolong its service life. For this reason, even when the size of the furnace is reduced through the adoption of a high-pressure system, the radiation loss from the surface of the furnace wall reaches several % of the whole heat input, thus causing a burden to an improvement in the whole efficiency.

When the gasification temperature is lowered, the decomposition of the combustible component does not proceed, it causes that hydrocarbons whose molecular weight is relatively large and high-molecular hydrocarbons such as tar are left rather than hydrogen and carbon monoxide as the fuel gas component for the fuel cell. When these high-molecular hydrocarbons flow into the fuel cell without being removed, they are not utilized as a fuel, resulting in not only lowered efficiency, but also causing condensation polymerization reaction to deposit carbon within the cell. Thus, the high-molecular hydrocarbons are causative of various troubles.

In recent years, however, various catalysts for promoting the complete gasification at a relative low temperature of 700 to 800°C have been studied. As a result, not only nickel but also sodium, potassium, calcium, FeO and other catalysts have been proven to be effective. Further, fuel cells having a high operating temperature, such as solid electrolyte fuel cell (SOFC) and molten carbonate fuel cell (MCFC), are characterized in that self-thermal reforming of the fuel gas, i.e., the internal reforming of the fuel gas can be performed by the use of their high operating temperature and the heat of combustion of the residual fuel gas, which has been leaked without being consumed within the fuel cell. When the internal reforming function can be effectively utilized, gas produced by gasification at a relatively low temperature can be utilized as a fuel gas in the fuel cell.

The catalysts described above have the function of decomposing tar and hydrocarbons contained in the gas produced in the gasification process into hydrogen and carbon monoxide, that is, the so-called "reforming function." In this case, reforming can be carried out by keeping a packed bed of the catalyst at a predetermined temperature and introducing the produced gas containing tar and hydrocarbons, together with reforming gas such as carbon dioxide or steam, into the packed bed. The temperature of the catalyst-packed bed is generally in the range of 700 to 800°C. Although the catalysts described above have catalytic activity as a simple substance of metal, many of them, even when brought to oxides (for example, CaO in the case of calcium), have the same function. These catalysts may be used as a fluidized medium of a fluidized-bed gasification furnace.

In this connection, it should be noted that if gas produced from various combustibles is used as a fuel gas in a fuel cell, sufficient attention should be paid to corrosive gases contained in the produced gas, such as hydrogen chloride and hydrogen sulfide. In particular, the solid electrolyte fuel cell (SOFC) and the molten carbonate fuel cell (MCFC) having a high operating temperature are liable to be subjected to severe corrosive conditions, and hence before the produced gas flows into the fuel cell, the above corrosive gasses should be removed.

When gas containing hydrogen chloride or hydrogen sulfide is produced, a packed bed of quick lime (CaO) can be effectively used in a process for removing these corrosive gases. Hydrogen chloride reacts with quick lime to produce calcium chloride ($CaCl_2$), while hydrogen sulfide reacts with quick lime to produce calcium sulfide (CaS). Therefore, if there is provided a packed bed of quick lime downstream of the gasification process in which hydrogen chloride or hydrogen sulfide is produced, then the corrosive components can be removed without significantly lowering of the gas temperature.

Further, attention should be paid to alkali metal salts such as sodium chloride (NaCl) and potassium chloride (KCl), as corrosive components which pose a problem of corrosion in the gasification of municipal wastes or the like. These alkali metal salts exist in the form of mist of a molten state in the temperature region of 650°C or higher, and are liable to adhere to portions having a temperature below the melting temperature, thus causing severe corrosion. Therefore, it is important to prevent metallic members constituting the fuel cell from being corroded by these molten salts. The molten alkali metal salts can be effectively removed from the produced gas by once cooling the produced gas to a temperature below the melting temperature of the salts to solidify the salts and removing them by a filter or the like.

Since the melting temperature of the alkali metal salts is 650°C or higher, cooling of the produced gas to a temperature below 650°C followed by precision dust collection such as dust collection through a ceramic filter can significantly alleviate the fear of corrosion caused by the molten salts. The temperature of 650°C is very advantageous also in handling the produced gas containing tar or the like. This is because tar is in a gaseous state at a temperature of 400°C or higher, and such a trouble as clogging of the filter by the tar does not occur.

According to a preferred aspect of the present invention, combustibles are gasified in a low-temperature gasification furnace at a temperature of 400 to 1000°C to produce gas, and the produced gas is cooled to 650°C or below, and then passed through a gas purifying apparatus to remove poisonous components therein, and further the purified produced gas is supplied to a fuel cell to generate electricity. In this case, solid components such as ash, char, and salts contained in the gas, which have been discharged from the low-temperature gasification furnace and cooled to 650°C or below, are collected through a medium-temperature dust collector to prevent such solid components from flowing into a gas purifying apparatus provided in a subsequent stage. Prior to the purification of the produced gas by means of a gas purifying apparatus, the produced gas may be heated to a high temperature of 1000 to 1500°C to decompose tar and hydrocarbons contained in the produced gas into lower-molecular materials, and then the produced gas may be supplied to the fuel cell.

Gas purifying apparatuses may be classified into two types, a dry type and a wet type. In the case where the fuel cell comprises a solid electrolyte fuel cell or a molten carbonate fuel cell, the use of the dry-type gas purifying apparatuses after cooling of the produced gas to 650°C or below is effective for preventing the loss of sensible heat, because the operating temperature of the solid electrolyte fuel cell is in the range of 900 to 1000°C and the operating temperature of the molten carbonate fuel cell is around 700°C. On the other hand, in the case where the fuel cell comprises a phosphoric acid fuel cell or a polymer electrolyte fuel cell, the temperature of the fuel gas supplied to the fuel cell should be cooled to 200°C or below, because the operating temperature of the phosphoric acid fuel cell is around 200°C and the operating temperature of the polymer electrolyte fuel cell is around 80°C. For this reason, gas purification at a high temperature is not required, and the wet-type gas purifying apparatuses can be adopted. Therefore, as a method for removing the alkali metals or the tar component, a scrubber may be employed to conduct washing with water.

The basic construction of the electric generating system by gasification of combustibles according to the present invention will be described with reference to FIGS. 23 through 25. In FIGS. 23 through 25, like or corresponding members are identified with the same reference numerals to avoid the repetition of the explanation.

FIG. 23 is a diagram showing the basic construction of the present invention. Combustibles are supplied to a gasification process A and gasified in the gasification process A. The gas produced in the gasification process A is cooled to 650°C or below in a heat recovery process B. If necessary, a dust collection process 3 may be provided upstream and/or downstream of the heat recovery process. The gas cooled in the heat recovery process B is introduced into a gas purifying process C where the gas is purified into a fuel gas for a fuel cell. The fuel gas is then supplied to a fuel cell power generation process 6.

FIG. 24 is a diagram showing a first construction of the gas purifying process C. By the introduction of the produced gas into the gas purifying process C, corrosive gases such as hydrogen chloride and hydrogen sulfide are removed in a corrosive gas removing process 4. The treated gas is then introduced into a fuel reforming process 5 to decompose hydrocarbons into hydrogen and carbon monoxide, and supplied to a fuel cell power generation process 6. It should be noted that, in the gasification process, when a high-temperature gasification furnace operated at a temperature of 1000 to 1500°C is provided in addition to the low-temperature gasification furnace and can fully decompose the hydrocarbons therein, the fuel reforming process 5 may be omitted. In the fuel reforming process, the reforming catalyst-packed fixed-bed or moving-bed reactor described above, or a low-temperature plasma reformer which can selectively decompose hydrocarbons without substantially raising the gas temperature may be used. The reformer in which low-temperature plasma is utilized has an advantage that there are no substantial restrictions on the operating temperature and the operating pressure. This first construction of the gas purifying process is suitable in the case where a fuel cell having a relatively high operating temperature, i.e., the solid electrolyte fuel cell or the molten carbonate fuel cell is used. The selection of a dry-type process using iron oxide or zinc oxide as an absorbent in the corrosive gas removing process enables the purified gas to be supplied to the fuel cell power generation process 6 without the sensible heat loss of the produced gas.

FIG. 25 is a diagram showing a second construction of the gas purifying process C. This second construction of the gas purifying process C is suitable in the case where the fuel cell comprises the polymer electrolyte fuel cell or the phosphoric acid fuel cell. As with the construction shown in FIG. 25, by the introduction of the produced gas into the gas purifying process C, corrosive gases such as hydrogen chloride and hydrogen sulfide are removed in a corrosive gas removing process 4 and the produced gas is then introduced into a fuel reforming process 5 where hydrocarbons are decomposed into hydrogen and carbon monoxide. The treated gas is then introduced into a converting process 17 where carbon monoxide is converted to hydrogen by a CO shift reaction. The gas is then introduced into a CO removing process 18 to remove the residual carbon monoxide, and then is passed through a hydrogen purifying process 19 using a hydrogen absorbing alloy to obtain pure hydrogen gas or highly enriched hydrogen gas which is then supplied to a fuel cell power generation process 6. When the fuel cell can cope with hydrogen-lean gas, the hydrogen purifying process can be omitted. A concrete construction of the corrosive gas removing process 4 is such that hydrogen chloride is removed in a wet-type gas cleaning process using a scrubber or the like, and a desulfurizing process using hydrogeneration desulfurization is provided downstream of the wet-type gas cleaning process. A combination of other methods may also be used to constitute the corrosive gas removing process. In some cases, providing a pretreatment process upstream of the converting process 17 and the CO removing process 18 is effective. A process for reducing the partial pressure of carbon dioxide in the gas or increasing the partial pressure of steam in the gas to accelerate the conversion reaction is effective as the pretreatment for the converting process. Specific examples of pretreatment methods usable herein include an amine absorption method in which carbon dioxide is absorbed to decrease the partial pressure of carbon dioxide, and a method in which steam is blown into the produced gas to increase the partial pressure of steam. The methods which are adopted as the pretreatment process for the CO-removing process 18 are different depending on the method for removing CO. Specifically, when a methanation process utilizing a methanation reaction is used as the method for removing CO, the amine absorption method for carbon dioxide is effective in minimizing the carbon dioxide content. On the other hand, when a selective oxidation process utilizing selective oxidation is used as the method for removing CO, oxygen-containing gas should be blown as an oxidizing agent. Although CO can also be removed by using low-temperature plasma, in this case, it is necessary to blow steam.

**Brief Description of Drawings**

FIG. 1 is a diagram showing the basic construction of a fuel cell combined-cycle electric generating system according to a first embodiment of the present invention;
FIG. 2 is a diagram showing the construction of a fuel cell combined-cycle electric generating system according to a second embodiment of the present invention;
FIG. 3 is a diagram showing the construction of a fuel cell combined-cycle electric generating system according to a third embodiment of the present invention;
FIG. 4 is a diagram showing the construction of a fuel cell combined-cycle electric generating system according to a fourth embodiment of the present invention;
FIG. 5 is a diagram showing a typical configuration of a main constituent equipment in the fourth embodiment of the present invention;
FIG. 6 is a diagram showing the construction of a fuel cell combined-cycle electric generating system according to a fifth embodiment of the present invention;
FIG. 7 is a diagram showing the construction of a fuel cell combined-cycle electric generating system according to a sixth embodiment of the present invention;
FIG. 8 is a diagram showing the construction of a fuel cell combined-cycle electric generating system according to a seventh embodiment of the present invention;
FIG. 9 is a diagram showing the construction of a fuel cell combined-cycle electric generating system according to an eighth embodiment of the present invention;
FIG. 10 is a diagram showing the construction of a fuel cell combined-cycle electric generating system according to a ninth embodiment of the present invention;
FIG. 11 is a view for explaining a moving-bed dust collector;
FIG. 12 is a schematic cross-sectional view showing the detailed structure of a fuel reformer;
FIG. 13 is a diagram showing the construction of a fuel cell combined-cycle electric generating system according to a tenth embodiment of the present invention;
FIG. 14 is a diagram showing the construction of a fuel cell combined-cycle electric generating system according to an eleventh embodiment of the present invention;
FIG. 15 is a diagram showing the construction of a fuel cell combined-cycle electric generating system according to a twelfth embodiment of the present invention;
FIG. 16 is a detailed view for explaining a raw material feeder.
FIG. 17 is a diagram showing the construction of a fuel cell combined-cycle electric generating system according to a thirteenth embodiment of the present invention;
FIG. 18 is a diagram showing the construction of a fuel cell combined-cycle electric generating system according to a fourteenth embodiment of the present invention;
FIG. 19 is a diagram showing the construction of a fuel cell combined-cycle electric generating system according to a fifteenth embodiment of the present invention;
FIG. 20 is a diagram showing the construction of a fuel cell combined-cycle electric generating system according to a sixteenth embodiment of the present invention;
FIG. 21 is a diagram showing the construction of a fuel cell combined-cycle electric generating system according to a seventeenth embodiment of the present invention;
FIG. 22 is a diagram showing the construction of a fuel cell combined-cycle electric generating system according to an eighteenth embodiment of the present invention;

FIG. 23 is a diagram showing the basic construction of a fuel cell combined-cycle electric generating system according to the present invention;

FIG. 24 is a diagram showing a first embodiment of the construction of a gas purifying process constituting the fuel cell combined-cycle electric generating system according to the present invention; and

FIG. 25 is a diagram showing a second embodiment of the construction of a gas purifying process constituting the fuel cell combined-cycle electric generating system according to the present invention.

## Best Mode for Carrying Out the Invention

Embodiments of the electric generating system by gasification of combustibles according to the present invention will be described with reference to FIGS. 1 through 22. In FIGS. 1 through 22, like or corresponding members are identified with the same reference numerals to avoid the repetition of the explanation.

FIG. 1 is a diagram showing the basic construction of a fuel cell combined-cycle electric generating system according to a first embodiment of the present invention. A raw material 21 is supplied through a raw material feeder 1 to a low-temperature gasification furnace 2 as a fluidized-bed gasification furnace where the raw material 21 is pyrolyzed in the temperature range of 400 to 1000°C to produce gas containing hydrogen and carbon monoxide, as a gas component useful for fuel cell power generation, and a trace amount of hydrocarbons. In this case, raising the temperature from temperature at the time of the introduction of the raw material to the temperature in the range of 400 to 1000°C is carried out by partial combustion of the raw material 21. Incombustibles 22 contained in the raw material 21 are discharged from the gasification furnace 2. The low-temperature gasification furnace may be a fluidized-bed furnace, or alternatively may be a rotary kiln, a stoker furnace or the like. When combustibles, such as municipal wastes, which have irregular shapes and contain incombustibles are used as the raw material, it is desirable to use the fluidized-bed furnace. This is because in the fluidized-bed furnace, unburned material does not adhere to the incombustibles to be discharged from the furnace, thus being less likely to pose a problem of the treatment and disposal of incombustibles. Further, when the fluidized-bed furnace is adopted, the bed temperature is preferably low so far as pyrolysis is not obstructed. Specifically, the furnace is preferably operated at a temperature of 400 to 600°C because the incombustibles are not oxidized and thus can be easily reutilized.

When combustibles such as municipal wastes having irregular shapes are used as the raw material, a raw material feeder as shown in FIG. 16 is preferably adopted to prevent air from leaking in through the raw material feeder. The raw material feeder shown in FIG. 16 will be described in more detail. An outer casing in the raw material feeder 1 comprises a hopper section 401 for a raw material, a casing 402 which is tapered so that the diameter is gradually reduced toward the front end thereof, a tapered perforated casing 403 having a plurality of openings 430 and provided downstream of the tapered casing 402, and a front casing 404 including an outlet 450. A screw shaft 410 whose diameter is gradually reduced toward the front end so as to correspond to the tapered casing is provided in the casing. Combustibles 21 as the raw material are supplied to the hopper section 401 for a raw material, and conveyed to the front end of the screw shaft by the rotation of the screw shaft 410. At the same time, the combustibles are compressed by the configuration of the taper in the screw shaft 410 and the casing 402. Water content is squeezed from the compressed combustibles, and is discharged to the outside of the raw material feeder through the plurality of openings 430 provided in the casing 403. The size of the openings is small enough to avoid the discharge of the combustibles through the openings, and the maximum diameter of the openings is about 10 mm. The combustibles having a reduced water content as a result of the compression are supplied through the outlet 450 to the low-temperature gasification furnace 2.

In the raw material feeder 1, the combustibles are in a compressed state within the casings 401, 402 and 403 to thus increase the internal pressure of the feeder 1, and hence air or the like does not enter the raw material feeder 1 from the outside. Further, the squeezing reduces the water content of the combustibles, and thus reduce heat loss caused by the latent heat of vaporization within the low-temperature gasification furnace. The oxygen ratio is lowered by the reduction in heat loss to enhance the cold gas efficiency. The compressed combustibles have relatively uniform density which can reduce a fluctuation in the amount of the supplied material. Thus, the raw material feeder shown in FIG. 16 is very favorable as a raw material feeder used in the present invention.

The simplest method for treating the squeeze of raw materials produced upon compression of the material by the raw material feeder is such that the squeeze of raw materials is supplied to the heat recovery process B (see FIG. 23) where the squeeze of raw material is mixed with the high-temperature produced gas to be evaporated and decomposed. However, when the squeeze of raw material cannot be supplied to the heat recovery process B because of heat balance or other reasons, the squeeze of raw materials may be led to a drying process to perform drying treatment. An advantageous drying treatment method is to use a drier of indirect heating type. Heat generated from the fuel cell 6 is best suited as a heat source for drying from the viewpoint of effective utilization of heat. In case that the heat transfer surface should be large due to the low temperature level (100°C or below) of the exhaust gas as in the polymer electrolyte fuel cell, heat recovered from the produced gas in the heat recovery process B may be used. When the quantity of heat is insufficient, an auxiliary fuel is added. The residual solid component after drying may be mixed into the raw material for processing. Vapor generated from the squeeze of raw materials during drying has an offensive smell, and thus is preferably supplied to the heat recovery process B where the vapor is mixed into the high-temperature produced gas to be decomposed. Thus, if after vaporization and drying of the squeeze of raw materials in the outside of the produced gas system, only the generated vapor is supplied to the heat recovery process, then it is expected to have an advantage, over blowing of the squeeze of raw materials per se into the heat recovery process, that the magnitude of lowering of gas temperature is so small that the amount of evaporation in the heat recovery process can be increased. In particular, in the case where a high-temperature gasification furnace operated at a temperature of 1000 to 1500°C is used in the gasification process and the heat recovery process is provided downstream of the high-temperature gasification furnace, such system is advantageous. This is because the temperature of the produced gas introduced into the heat recovery process is as high as around 1300°C, the heat transfer in the heat recovery process is governed by radiation heat transfer, and the degree of an increase in the quantity of heat recovered by keeping the gas at a high temperature is large.

The produced gas and a solid component such as ash content discharged from the low-temperature gasification furnace 2 are supplied to a dust collector 3. At this time, the inlet temperature of the dust collector is kept at 400 to 650°C. In a downstream portion in the low-temperature gasification furnace 2, i.e., in a freeboard portion, the gas temperature is lower than that in the fluidized-bed portion due to the progress of pyrolytic endothermic reaction. Therefore, even if the fluidized-bed temperature is 950°C, there is a possibility that the gas temperature in the freeboard portion becomes a temperature lower than 650°C. When the gas temperature is high, a radiation boiler may be provided. On the other hand, when the gas temperature is 400°C or below, air or oxygen may be supplied to the freeboard portion to raise the gas temperature, thereby avoiding tar troubles. A cyclone may be used as a dust collector. It is, however, desirable that a filter system having high dust-collecting performance is adopted. In the temperature range of 400 to 650°C, a high-temperature bag filter may be used as a dust collector. Alternatively, a ceramic filter or the like which is rapidly under development may be used.

The produced gas, from which solid components such as ash and alkali metal salts 23 have been removed in the dust collector 3, is supplied into a corrosive gas removing apparatus 4 where corrosive gases such as hydrogen chloride and hydrogen sulfide are removed from the produced gas. The above-described quick lime-packed bed is effective as the corrosive gas removing apparatus. For example, a moving-bed dust collector utilizing quick lime or the like as shown in FIG. 11 may be used. This system has both the dust-collecting function and the corrosive gas removing function, and thus can simplify the whole equipment. Medium for forming the moving bed in the moving-bed dust collector comprises dolomite, in addition to quick lime. For the removal of a sulfur component, a process in which the whole sulfur component is converted in the presence of an Ni-Mo-base catalyst to hydrogen sulfide and the converted hydrogen sulfate reacts with zinc oxide (ZnO) to produce zinc sulfide (ZnS) which is then recovered.

Next, the moving-bed dust collector shown in FIG. 11 will be described. The moving-bed dust collector 150 comprises a casing 151 having a filter 152 therein. The filter 152 has a CaO particle-packed bed 153, and CaO particles are circulated between the filter 152 and an external regenerator 154 through a circulation path 155. The produced gas discharged from the dust collector 3 (see FIG. 1) enters the dust collector 150 through an inlet 151a in the casing 151, and flows into the filter 152. Within the filter 152, hydrogen sulfide ($H_2S$) and hydrogen chloride (HCl) contained in the produced gas are removed by a reaction thereof with CaO, and the purified produced gas is discharged through an outlet 151b of the casing 151. The reaction formula in this case is as follows:

$$H_2S + CaO \rightarrow CaS + H_2O$$

$$2HCl + CaO \rightarrow CaCl_2 + H_2O$$

CaO remaining unreacted and the reaction products (CaS and $CaCl_2$) are supplied to the regenerator 154 where CaS and $CaCl_2$ are removed, and only CaO is returned to the filter 152 through the circulation path 155. CaO in an amount consumed in the reaction with hydrogen sulfide and hydrogen chloride is replenished through the circulation path 155.

In the corrosive gas removing apparatus 4 comprising the moving-bed dust collector 150 or the like, the produced gas from which the corrosive gas is removed is supplied to a fuel reformer 5 wherein hydrocarbons contained in the produced gas are decomposed into hydrogen and carbon monoxide. High temperature is necessary for accelerating the decomposition, and hydrogen and carbon monoxide contained in gas discharged from the anode (negative electrode) side in the fuel cell are effectively utilized as a heat source for providing the high temperature. Therefore, if necessary, oxygen gas ($O_2$) 31 is supplied to the fuel reformer 5 to combust the residual gas.

FIG. 12 is a schematic cross-sectional view showing the detailed structure of a fuel reformer 5. The fuel reformer 5 comprises a housing 190 and a reaction tube 191 provided within the housing 190 and packed with an Ni-Mo-base or Co-Mo-base catalyst for accelerating a reduction in molecular weight of hydrocarbons. The produced gas and, if necessary, hydrogen for reforming and steam as an oxygen source are supplied into the reaction tube 191. The fuel gas contained in the exhaust gas discharged from the anode and the newly supplied oxygen are supplied into a burner 192 to combust the fuel gas. The reaction tube 191 is heated to about 800°C by heat produced by the combustion reaction for thereby completely decomposing hydrocarbons contained in the produced gas into hydrogen and carbon monoxide.

The produced gas which is mainly composed of hydrogen and carbon monoxide produced by gasification in the gasification furnace 2, the fuel gas composed of hydrogen and carbon monoxide produced by decomposition of high-molecular hydrocarbons in the fuel reformer 5, steam, and carbon dioxide is supplied into the negative electrode side of the molten carbonate fuel cell (MCFC) 6 to generate electricity. At this time, air 32 or oxygen is supplied as an oxygen source into the positive electrode side of the fuel cell 6. Normally, since the conversion rate of the fuel gas within the fuel cell is not 100%, the exhaust gas discharged from the negative electrode side of the fuel cell 6 contains a small amount of an unreacted fuel gas (composed of hydrogen and carbon monoxide) in addition to steam and carbon dioxide as the main component, and is utilized as a heat source for reforming of the fuel gas.

The temperature of the exhaust gas discharged from the negative electrode side of the fuel cell is substantially equal to the operating temperature of the fuel cell. Therefore, this sensible heat can be reutilized as a heat source for gasification to thus reduce the amount consumed by the partial combustion of combustibles. As a result, advantageously, the gasification efficiency can be improved, and, in addition, by virtue of the high steam content of the exhaust gas, the gasification reaction can be accelerated by the steam reforming effect. The exhaust gas discharged from the negative electrode side of the fuel cell 6 contains a small amount of an unreacted fuel gas (composed of hydrogen and carbon monoxide), in addition to steam and carbon dioxide as the main component. According to the present embodiment, a high-temperature blower 9 is utilized to reutilize the exhaust gas having a temperature of 600 to 700°C discharged from the negative electrode side of the fuel cell as a gasifying agent and a fluidizing gas for the low-temperature gasification furnace 2. When the sensible heat per se of the circulation gas is insufficient for maintaining the bed temperature of the low-temperature gasification furnace 2, if necessary, oxygen ($O_2$) 31 may be supplied to the low-temperature gasification furnace 2. In this case, regarding the supply of oxygen gas, mixing of oxygen gas into the circulation gas is liable to cause the residual combustible gas to be combusted, thus becoming a high temperature. Therefore, the oxygen gas and the circulation gas are preferably supplied independently of each other to the low-temperature gasification furnace 2. Further, the supply of oxygen having 100% purity is dangerous due to excessively high activity, and hence it is desirable that oxygen which has been diluted with steam, carbon dioxide or the like is supplied.

In the molten carbonate fuel cell (MCFC), since it is necessary to supply carbon dioxide to the positive electrode side, a part of the exhaust gas discharged from the negative electrode side is supplied to a gas combustor 7 to completely combust the combustibles, and a part of the combusted gas is cooled in a gas cooler 8 to remove water ($H_2O$) 36 therefrom, thus producing carbon dioxide ($CO_2$) 35 having high purity. A necessary amount of carbon dioxide 35 is supplied through a blower 12 to the positive electrode of the fuel cell 6, and the remainder of the carbon dioxide 35 is discharged to the outside of the system. The discharged carbon dioxide having high purity can be utilized as chemical materials for other applications. Alternatively, the carbon dioxide may be fixed to inhibit the emission of carbon dioxide, thus contributing to the prevention of global warming. The remaining complete combustion gas discharged from the gas combustor 7, together with the exhaust gas discharged from the positive electrode side of the fuel cell, is supplied to a waste heat boiler 10 where heat is recovered and utilized as a heat source for steam cycle. The exhaust gas from the waste heat boiler 10 is discharged to the outside of the system through a blower 11. Heat produced in the gas combustor 7 can also be effectively utilized as a heat source for the fuel reforming.

FIG. 2 is a diagram showing the construction of a fuel cell combined-cycle electric generating system according to a second embodiment of the present invention. In the fuel cell combined-cycle electric generating system according to this embodiment shown in FIG. 2, the fuel reformer 5, the fuel cell 6 and the gas combustor 7 are integrated to simplify the equipment and to improve the efficiency. This integration enables heat produced in the fuel cell 6 and the gas combustor 7 to be effectively utilized for fuel reforming, and thus is effective in improving the overall efficiency. The other construction of the embodiment shown in FIG. 2 is the same as that of the embodiment shown in FIG. 1.

When combustibles having a low calorific value, such as municipal wastes, are gasified by the process shown in FIG. 2, the calorific value of the produced gas is as low as 1.88 to 2.10 MJ/$m^3$ (NTP) (450 to 500 kcal/$Nm^3$) on a wet gas basis, and about 2.72 MJ/$m^3$ (NTP) (650 kcal/$Nm^3$) on a dry gas basis. The produced gas comprises about 13% of hydrogen by volume and about 3% of carbon monoxide by volume as an effective gas component, and the remaining component consisting of steam and carbon dioxide. The use of the gas having the above chemical composition in power generation in the fuel cell poses a problem that, due to the low effective gas content, the efficiency of contact of the effective gas with the electrode is so low that the effective utilization of the fuel gas within the fuel cell is lowered, and the performance of the cell cannot be sufficiently utilized, resulting in lowered output. In such case, increasing of the pressure of the system is effective for solving this problem. Specifically, increasing of the pressure can enhance the partial pressure of the effective gas, improve the efficiency of contact of the electrode with molecules of the effective gas, and thus enhance the effective utilization factor of the fuel gas.

Further, enhancing of the partial pressure of the fuel gas component can realize not only the enhanced effective utilization factor of the fuel gas, but also improved power generation efficiency per se of the fuel cell. Further, increasing of the pressure can reduce the volume of the fuel gas, thus contributing to the realization of a compact gas purification process.

As a method for increasing the pressure of the fuel gas supplied to the fuel cell, the following are considered: The method in which the gasification furnace per se is operated under pressure and the method in which gasification is carried out at the atmospheric pressure and the produced gas is then compressed. The former method involves the difficulty of supplying the raw material to the pressurized system, and it is particularly difficult to feed combustibles having irregular shapes such as municipal wastes into a high pressure section. On the other hand, in the latter method, in order to suppress the energy of compression, gas has to be cooled before the compression, and hence the sensible heat loss is disadvantageously increased by a quantity corresponding to the degree of lowering of temperature. In the case where a polymer electrolyte fuel cell (PEFC) or a phosphoric acid fuel cell (PAFC) is adopted as a fuel cell, the feed gas temperature should be lowered in any case. In the case where a molten carbonate fuel cell (MCFC) or a solid electrolyte fuel cell (SOFC) is adopted, although high-temperature gas can be supplied, the gas should be once cooled for compression, thus causing energy loss.

Therefore, when MCFC or SOFC is used as the fuel cell, it is preferable that the gasification furnace per se is operated under pressure. On the other hand, when PEFC or PAFC is used, in consideration of the above disadvantage, the most suitable gas compression method can be selected and adopted for each system. Although it is theoretically desirable that the pressure of the fuel gas supplied into the fuel cell is higher, from the viewpoint of the practical use and the pressure-resistant structure of the fuel cell, the pressure of the fuel gas supplied into the fuel cell is in the range of 0.2 to 1.0 MPa, preferably 0.4 to 0.8 MPa, and more preferably 0.5 to 0.6 MPa. In this case, the operating pressure in the gasification process should be 5 to 50 kPa higher than the pressure normally applied to the fuel cell. When the pressure of the fuel gas is increased by means of a compressor before the supply of the fuel gas to the fuel cell, the gasification process may be operated at any pressure. In consideration of the supply of the raw material to the gasification furnace, however, it is preferable that the gasification furnace is operated at a pressure lower than the atmospheric pressure by 0.2 to 1.0 kPa.

FIG. 3 is a diagram showing the construction of a fuel cell combined-cycle electric generating system according to a third embodiment of the present invention. The third embodiment shown in FIG. 3 is one of embodiments in which the fuel gas is pressurized. In the present embodiment, a fuel cell 6, a fuel reformer 5, a gas combustor 7, a gas cooler 8, a corrosive gas removing apparatus 4, a dust collector 3, and a low-temperature gasification furnace 2 are housed in a pressurized state in a pressure vessel 13. In this case, the raw material should be supplied from the atmospheric pressure system to a pressurized system, and hence the supply of the raw material to the low-temperature gasification furnace 2 through a lock hopper feeder or the like is preferred. Combustibles having irregular shapes, such as municipal wastes, are likely to cause bridge trouble or the like in the hopper section. For this reason, the use of combustibles having a nature to be easily handled is suitable in this system. For example, RDF prepared by removing incombustibles from municipal wastes, and drying and forming the residual combustibles into a solid fuel, and tire chips are suitable fuels for this system.

When fuel cell power generation is performed under pressure as in the present embodiment, high-pressure gas having a temperature of about 700°C is discharged from a molten carbonate fuel cell (MCFC). Therefore, the exhaust gas discharged from the fuel cell 6 can be introduced into a gas turbine (a gas expander) 14 to recover power by means of the gas turbine 14. Exhaust gas discharged from the gas turbine 14 is supplied into a waste heat boiler 10 where heat recovery is performed, and the obtained steam is led to a steam turbine to recover power. Thus, a three-stage combined-cycle power generation of the fuel cell 6, the gas turbine 14, and the steam turbine (not shown) can be realized. In FIG. 3, only one pressure vessel 13 is provided in the whole system. Alternatively, a plurality of pressure vessels may be provided, and the apparatuses are housed in the pressure vessels, respectively. The other construction of the embodiment shown in FIG. 3 is the same as that of the embodiment shown in FIG. 2.

Another system may be applied to combustibles having a high calorific value, such as waste plastics. In recent years, due to the restriction of the final disposal site and the like, there is a growing demand for slagging of incineration ash to reutilize the resultant slag. High calorific combustibles, such as waste plastics, have a calorific value high enough to perform slagging of ash content or increasing the temperature of the produced gas to reduce the molecular weight of the produced gas, and thus can be applied to various processes.

FIG. 4 is a diagram showing the construction of a fuel cell combined-cycle electric generating system according to a fourth embodiment of the present invention. The fourth embodiment shown in FIG. 4 is an embodiment in which fuel cell combined-cycle power generation is carried out using, as a raw material, combustibles having a high calorific value such as waste plastics. A raw material 21 is pyrolyzed and gasified at a temperature of 400 to 1000°C in a low-temperature gasification furnace 2 to produce gas, and the produced gas is supplied into a high-temperature gasification furnace 15. In the high-temperature gasification furnace 15, the produced gas is further gasified at a temperature of 1000 to 1500°C to reduce the molecular weight of the produced gas. The high-temperature gasification furnace 15 is kept at the melting temperature of ash content contained in the produced gas or higher. Thus, 80 to 90% of the ash content contained in the produced gas is slagged, and the slag is discharged as molten slag 26 to the outside of the system. The organic matter and hydrocarbons contained in the produced gas are completely decomposed in the high-temperature gasification furnace into hydrogen, carbon monoxide, steam, and carbon dioxide. The gas produced in the high-temperature gasification furnace 15 is then cooled to 650°C or below in a waste heat boiler comprising a radiation boiler 16 to solidify molten alkali metal salts. The alkali metal salts 24 after the solidification are collected by means of a dust collector 3. On the other hand, steam 36 produced in the waste heat boiler is supplied to a steam turbine to recover power.

The low-temperature gasification furnace is operated in the temperature range of 400 to 1000°C, preferably 450 to 800°C, and more preferably 500 to 600°C. The high-temperature gasification furnace is operated in the temperature range of 1000 to 1500°C, preferably 1000 to 1400°C, and more preferably 1100 to 1350°C.

The produced gas after the complete decomposition of the organic matter and the removal of the solid matter is led to a corrosive gas removing apparatus 4 in which corrosive gas is removed. The produced gas after the removal of corrosive gas is utilized in a fuel cell 6 to generate electricity. In this process, the high-temperature gasification furnace 15 has two functions for fuel reforming and slagging of ash. This process has a great advantage that ash can be slagged and then withdrawn separately from alkali metal salts and metals having a low melting point, thereby contributing to a reduction of the problem of ash disposal. Further, reforming of the fuel immediately before the fuel cell can be eliminated. This process, however, has disadvantages that the produced gas which has been once heated to 1000°C or higher should be lowered to 650°C which is a temperature lower than the solidification point of the molten alkali metal salts. Since this high-temperature produced gas still contains a large amount of corrosive components, despite high-temperature sensible heat, heat should be recovered as steam of low temperature. This unfavorably lowers the efficiency by the degree of lowering of temperature.

In recent years, however, there has been developed a technology for recovering a high-temperature sensible heat of 700°C or higher from high-temperature gas using gas such as air as a heat recovery medium. Oxygen, steam, or the like utilized as a gasifying agent for the low-temperature gasification furnace is used as a heating medium, and after heating to 700°C or higher, the heating medium is supplied to the gasification furnace to effectively utilize the high-temperature sensible heat.

A part of the exhaust gas discharged from the negative electrode side of the fuel cell 6 is supplied to the low-temperature gasification furnace 2 through a high-temperature blower 9 to reutilize the exhaust gas as the gasifying agent and the fluidizing gas. The exhaust gas discharged from the negative electrode side of the fuel cell 6 is also supplied into the gas combustor 7 and the high-temperature gasification furnace 15.

At this time, it is effective that a high-temperature sensible heat recovery apparatus is provided instead of the radiation boiler 16 downstream of the high-temperature gasification furnace 15, and indirect heat exchange is carried out between the high-temperature gas and a part of the exhaust gas discharged from the negative electrode side of the fuel cell 6 to recover high-temperature sensible heat of the high-temperature gas which is then returned to the low-temperature gasification furnace 2. In supplying a part of the exhaust gas discharged from the negative electrode side to the high-temperature gasification furnace, it is crucial that the exhaust gas should not be mixed with oxygen-containing gas until the exhaust gas flows into the high-temperature gasification furnace. A supply nozzle for exhaust gas discharged from the negative electrode side and an oxidizing agent supply nozzle provided in the high-temperature gasification furnace should be provided separately. When the exhaust gas and the oxidizing agent should be unavoidably supplied through one nozzle, a two-fluid nozzle having a double-pipe structure is used so that the exhaust gas discharged from the negative electrode side and the oxidizing agent are mixed with each other only within the furnace.

On the other hand, the exhaust gas discharged from the positive electrode side of the fuel cell 6 is supplied into the gas combustor 7 and the waste heat boiler 10. After combustibles contained in the exhaust gas are combusted in the gas combustor 7, a part of the exhaust gas discharged from the gas combustor 7 joins the exhaust gas of the waste heat boiler 10, and the combined exhaust gas is discharged to the outside of the system through the blower 11. The other part of the exhaust gas discharged from the gas combustor 7 is cooled in a gas cooler 8 to remove water content ($H_2O$) 36, thus forming high-purity carbon dioxide ($CO_2$) 35. This carbon dioxide is then supplied in a necessary amount into the positive electrode of the fuel cell 6 through the blower 12.

In this connection, it should be noted that the circulation of carbon dioxide is required only in the case where the molten carbonate fuel cell (MCFC) is used as the fuel cell, and is not required when other fuel cells are adopted.

FIG. 5 shows typical configuration of main constituent apparatuses constituting the fourth embodiment of the present invention. The low-temperature gasification furnace 2 is a cylindrical fluidized-bed furnace having an internally circulating flow of a fluidized medium therein, and has an enhanced ability of materials to be diffused within the furnace for thereby realizing stable gasification. An oxygen-free gas is supplied into the central part of the interior of the furnace wherein a fluidized medium moves downward, while an oxygen-containing gas is supplied into the peripheral part of the furnace. This permits char produced within the low-temperature gasification furnace to be selectively combusted, contributing to an improvement in conversion rate of carbon and cold gas efficiency. The high-temperature gasification furnace 15 is a swirling-type slagging combustion furnace.

The cylindrical fluidized-bed furnace shown in FIG. 5 will be described in more detail. A conical distributor plate 106 is disposed at the bottom of the cylindrical fluidized-bed furnace. A fluidizing gas supplied through the distributor plate 106 comprises a central fluidizing gas 207 which is supplied from a central portion 204 of the bottom to the interior of the furnace as an upward flow, and a peripheral fluidizing gas 208 which is supplied from a peripheral portion 203 of the bottom to the interior of the furnace as an upward flow.

The central fluidizing gas 207 comprises an oxygen-free gas, and the peripheral fluidizing gas 208 comprises an oxygen-containing gas. The total amount of oxygen in all of the fluidizing gas is set to be 10% or higher and 30% or lower of the theoretical amount of oxygen required for combustion of combustibles. Thus, the interior of the furnace 1 is kept in a reducing atmosphere.

The oxygen ratio 10 to 30% is a value in the case where combustibles having a low calorific value, such as municipal wastes, are used as the raw material, and when combustibles having a high calorific value, such as waste plastics, are used as the raw material, the oxygen ratio is 5 to 10%.

The mass velocity of the central fluidizing gas 207 is set to be smaller than that of the peripheral fluidizing gas 208. The upward flow of the fluidizing gas in an upper peripheral region of the furnace is deflected toward a central region of the furnace by a deflector 206. Thus, a moving bed 209 in which the fluidized medium (generally silica sand) are moved downward and diffused on the distributor plate is formed in the central region of the furnace. In the peripheral region of the furnace, a fluidized bed 210 in which the fluidized medium is actively fluidized is formed. As indicated by the arrows 118, the fluidized medium ascends in the fluidized bed 210 in the peripheral region of the furnace, is deflected by the deflector 206 to an upper portion of the moving bed 209, and descends in the moving bed 209. Then, as indicated by the arrows 112, the fluidized medium moves along the fluidizing gas distributor plate 106 and moves into a lower portion of the fluidized bed 210. In this manner, the fluidized medium circulates in the fluidized bed 210 and the moving bed 209 as indicated by the arrows 118, 112.

While the raw materials 21 supplied to the upper portion of the moving bed 209 by a metering feeder 1 descend together with the fluidized medium in the moving bed 209, the raw materials are volatilized with heating by the fluidized medium. Because there is no or little oxygen available in the moving bed 209, the pyrolysis gas (produced gas) produced by the gasification, which comprises volatile matter, is not combusted and passes through the moving bed 209 as indicated by the arrows 116. Consequently, the moving bed 209 forms a gasification zone G. The produced gas moves into a freeboard 102 as indicated by the arrow 120, and is discharged from a gas outlet 108 as a gas g.

Char (fixed carbon) and tar produced in the moving bed 209 which are not gasified move together with the fluidized medium from the lower portion of the moving bed 209 to the lower portion of the fluidized bed 210 in the peripheral region of the furnace as indicated by the arrows 112, and are partially oxidized by the peripheral fluidizing gas 208 having a relatively large oxygen concentration. Consequently, the fluidized bed 210 forms an oxidization zone S. In the fluidized bed 210, the fluidized medium is heated by the heat of combustion in the fluidized bed. The fluidized medium heated to a high temperature is turned over by the deflector 206 as indicated by the arrows 118, and transferred to the moving bed 209 where it serves as a heat source for gasification. In this manner, the fluidized bed is kept at a temperature ranging from 400 to 1000°C, preferably from 400 to 600°C, thus continuing controlled combustion reaction. A ringshaped incombustible discharge port 205 is formed at the peripheral portion of the bottom of the fluidized-bed gasification furnace for discharging the incombustibles 22.

According to the fluidized-bed gasification furnace shown in FIG. 5, the gasification zone G and the oxidization zone S are formed in the fluidized bed, and the fluidized medium circulates in both zones. Because the fluidized medium serves as a heat transfer medium, good quality combustible gas having a high heating value is generated in the gasification zone G, and char and tar which are difficult to be gasified is combusted efficiently in the oxidization zone S. Consequently, gasification efficiency of combustibles such as wastes can be improved and the produced gas having a good quality can be generated. This fluidized-bed gasification furnace is the best suited as the low-temperature gasification furnace in the first to third embodiments. The low-temperature gasification furnace is not limited to the cylindrical fluidized-bed furnace, and, as with the above embodiments, a kiln-type or stoker-type furnace may be adopted.

A circulating flow-type fluidized-bed furnace shown in FIG. 5 is more effective when particles having the function of accelerating a reduction in molecular weight of hydrocarbons such as nickel-molybdenum-base or cobalt-molybdenum-base catalysts, or alkali metals such as sodium or potassium, or either a simple substance or in the form of a metal oxide of an alkaline earth metal such as calcium are used as the fluidized medium of the fluidized bed. The reason for this is as follows: When the molecular weight of hydrocarbons is reduced in the presence of catalyst particles in a reducing atmosphere, the deposition of carbon on the surface of the catalyst and hence lowering of the function of the catalyst are unavoidable. However, in the case of an internally circulating flow-type fluidized-bed furnace in which an oxidation zone having a relatively high partial pressure of oxygen is present within the same furnace, carbon on the surface of the catalyst can be combusted and removed in the oxidation zone. Since the catalyst particles recover the catalytic activity again due to the removal of carbon deposited on the particle surface, the effective utilization of the catalyst can be realized.

Next, the swirling-type slagging combustion furnace will be described in more detail. The high-temperature gasification furnace 15 includes a cylindrical primary gasification chamber 15a having a substantially vertical axis, a secondary gasification chamber 15b which is slightly inclined to the horizontal direction, and a tertiary gasification chamber 15c disposed downstream of the secondary gasification chamber 15b and having a substantially vertical axis. A slag discharge port 142 is provided between the secondary gasification chamber 15b and the tertiary gasification chamber 15c. Up to the slag discharge port 142, most of ash content is slagged and discharged through the slag discharge port 142. The produced gas is supplied into the swirling-type slagging combustion furnace in the tangential direction so that a swirling flow of the gas is created within the primary gasification chamber 15a. The produced gas supplied into the swirling-type slagging combustion furnace forms a swirling flow, and solid matter contained in the gas is trapped on the circumferential inner wall surface under a centrifugal force. Therefore, advantageously, the percentage of slagging and the percentage of slag collection are high, and slag mist is less likely to be scattered.

Oxygen is supplied into the swirling-type slagging combustion furnace through a plurality of nozzles 134 so as to properly maintain the temperature distribution in the furnace. The temperature distribution is regulated so that the decomposition of hydrocarbons and the slagging of ash are completed in the primary gasification chamber 15a and the secondary gasification chamber 15b. When oxygen is solely supplied, for example, there is a fear of a nozzle being burned. Therefore, oxygen is diluted with steam or the like before supplying, as necessary. Further, steam contributes to steam reforming to reduce the molecular weight of hydrocarbons, and thus should be supplied in a satisfactory amount. This is because the interior of the furnace has a high temperature, and when the amount of the steam is insufficient, condensation polymerization takes place to produce graphite having very low reactivity which is causative of unburned fuel loss.

The slag flows down on the lower surface of the secondary gasification chamber 15b, and is discharged as molten slag 26 through the slag discharge port 142. The tertiary gasification chamber 15c serves as a buffer zone which prevents the slag discharge port 142 from being cooled by radiational cooling from a waste heat boiler provided downstream of the tertiary gasification chamber 15c, and serves to reduce the molecular weight of the undecomposed gas. An exhaust port 144 for discharging produced gas is provided at the upper end of the tertiary gasification chamber 15c, and a radiation plate 148 is provided on the lower part of the tertiary gasification chamber 15c. The radiation plate 148 serves to reduce the quantity of heat emitted through the exhaust port 144 by radiation. Reference numeral 132 denotes a start-up burner, and reference numeral 136 denotes a stabilizing burner. Organic matter and hydrocarbons contained in the produced gas are completely decomposed in the high-temperature gasification furnace into hydrogen, carbon monoxide, steam, and carbon dioxide. The gas produced in the high-temperature gasification furnace 15 is discharged from the exhaust gas port 144, and then is cooled to 650°C or below in the waste heat boiler 16 comprising a radiation boiler to solidify molten alkali metal salts. The alkali metal salts 24 after the solidification are then collected by the dust collector 3. The high-temperature gasification furnace is not limited to this swirling-type slagging combustion furnace, and may be of other gasification furnace type.

FIG. 6 shows the construction of a fuel cell combined-cycle electric generating system according to the fifth embodiment of the present invention. The fifth embodiment shown in FIG. 6 is an embodiment in which the configuration of the high-temperature gasification furnace has been modified to a configuration which is advantageous for the discharge of the slag. Specifically, the high-temperature gasification furnace 15 has a two-stage construction, upper-stage and lower-stage furnaces. The produced gas flows into the upper-stage furnace of the high-temperature gasification furnace 15 and flows towards the lower-stage furnace. In this case, the gas flows also in a direction in which slag drops by gravity. Therefore, the flow is smooth, and clogging troubles are less likely to occur at the slag discharge port. A waste heat boiler comprising the radiation boiler 16 is provided on the lower-stage side of the high-temperature gasification furnace 15. The other construction is the same as that of the fourth embodiment shown in FIG. 4.

FIG. 7 shows the construction of a fuel cell combined-cycle electric generating system according to the sixth embodiment of the present invention. The sixth embodiment shown in FIG. 7 is the same as the fourth embodiment shown in FIG. 4, except that the sixth embodiment is of pressurized type. More specifically, the low-temperature gasification furnace 2, the high-temperature gasification furnace 15, the dust collector 3, the corrosive gas removing apparatus 4, the fuel cell 6, the gas combustor 7, and the gas cooler 8 are housed in a pressure vessel 13. The inside of all the apparatuses within the pressurized vessel 13 are in the state of being pressurized to a predetermined pressure. As with the third embodiment shown in FIG. 3, this embodiment is a system which can perform three-stage combined-cycle power generation of fuel cell power generation, gas turbine power generation, and steam turbine power generation.

Among the waste plastics, when combustible plastics having a high chlorine content, such as polyvinyl chloride, are used as the raw material, special care should be taken to remove chlorine. FIG. 8 shows the construction of a fuel cell combined-cycle electric generating system according to the seventh embodiment of the present invention. In this embodiment, the produced gas containing solids such as char discharged from the top of the low-temperature gasification furnace 2 is supplied to the high-temperature gasification furnace 15, and by being brought in contact with oxygen and steam contained in the gasifying agent, the produced gas is completely gasified at a high temperature of 1300°C or higher. The ash content in the gas is converted to slag mist due to the high temperature, and the slag mist, together with the produced gas, enters a quenching chamber 15A. In the quenching chamber 15A, slag 26 is hydropulped in water, and is discharged to the outside of the system. On the other hand, the produced gas, which has been flowed into the quenching chamber 15A, is cooled with water in the quenching chamber 15A, and chlorine contained in the produced gas is removed by being washed with water. The purified produced gas from which chlorine is removed is supplied to the fuel cell 6, and is utilized to generate electricity. The exhaust gas discharged from the negative electrode side of the fuel cell 6 is supplied by means of the high-temperature blower 9 into the low-temperature gasification furnace 2 through the gas combustor 7, and is reutilized as a gasifying agent and a fluidizing gas in the low-temperature gasification furnace 2.

On the other hand, the exhaust gas discharged from the positive electrode side of the fuel cell 6, together with the exhaust gas discharged from the gas combustor 7, is supplied to the gas turbine 14 where power is recovered. The exhaust gas discharged from the gas turbine 14 is discharged through the waste heat boiler 10 to the outside of the system.

FIG. 9 shows the construction of a fuel cell combined-cycle electric generating system according to the eighth embodiment of the present invention. The eighth embodiment shown in FIG. 9 is an embodiment in which an integral gasification furnace proposed by the present inventors and comprising a gasification chamber, a char combustion chamber, and a heat recovery chamber integrated in one furnace has been applied as the low-temperature gasification furnace according to the present invention. As shown in FIG. 9, the interior of the low-temperature gasification furnace 2 is divided by means of a first partition wall 302 into a gasification section 303 and a combustion section 304. The first partition wall 302 is provided with a connection port 337 to connect the gasification section 303 and the combustion section 304 to each other. A gasification chamber 305 is provided within the gasification section 303. A gas discharge port 349 is provided in the gasification section 303, and the produced gas is discharged through the gas discharge port 349 to the outside of the furnace.

On the other hand, the combustion section 304 is further divided by means of a second partition wall 350 into a char combustion chamber 306 and a heat recovery chamber 307. The upper part of the combustion section 304, however, is not divided, and the char combustion chamber and the heat recovery chamber are integrated in the freeboard portion. The respective exhaust gases are mixed together in the freeboard portion, and then discharged through a gas discharge port 351 to the outside of the furnace. A heat transfer surface 346 is embedded in the heat recovery chamber 307, and heat can be recovered from the fluidized medium. A lower connection port 340 is provided in the second partition wall 350, and the lower connection port 340 allows the fluidized medium to be moved between the char combustion chamber 306 and the heat recovery chamber 307 in combination with the upper opening. A fluidizing gas is supplied so that two different fluidized bed regions are formed within the fluidized bed in the gasification chamber 305. As a result, a circulating flow is created such that the fluidized medium is moved downward in a weakly fluidized bed region, and is moved upward in a strongly fluidized bed region.

On the other hand, in the combustion section 304 also, a fluidizing gas is supplied so that two different fluidized bed regions are formed within the fluidized bed in the char combustion chamber 306. As a result, a circulating flow is created such that the fluidized medium is moved downward in a weakly fluidized bed region, and is moved upward in a strongly fluidized bed region. Further, in the heat recovery chamber 307 also, the fluidizing gas is ejected so as to provide a substantially small superficial gas velocity, and hence a weakly fluidized region as a downward flow of the fluidized medium is formed above the furnace bottom.

The raw material 21 is introduced into the gasification chamber 305 within the low-temperature gasification furnace 2 operated under pressure where the raw material 21 is pyrolyzed. The gas produced in the gasification chamber 305 is introduced into the high-temperature gasification furnace 15. Among char produced in the gasification chamber 305, char particles having such a size that the char particles will stay within the fluidized bed are carried by the flow of the fluidized medium to the char combustion chamber 306 where the char particles are completely combusted. Air for combustion is supplied into the char combustion chamber 306, and the combustion gas, together with the exhaust gas discharged from the positive electrode side of the fuel cell 6, is supplied into the gas turbine 14 to recover power. Among the char produced in the gasification chamber 305, the char particles having such a size that the char particles will be carried with the produced gas flow into the high-temperature gasification furnace 15, and react with oxygen and steam at a high temperature of 1300°C or higher to be gasified completely. The exhaust gas discharged from the negative electrode side of the fuel cell 6 is pressurized by means of the high-temperature blower 9, and the residual fuel is completely combusted in the gas combustor 7. The combusted gas which is then reutilized as a gasifying agent and a fluidizing gas in the gasification chamber 305 of the low-temperature gasification furnace 2, and, in addition, as a diluting gas for diluting oxygen to be supplied into the high-temperature gasification furnace 15. Since the exhaust gas discharged from the negative electrode side has a temperature of about 700°C, the supply of oxygen for the purpose of supplying heat for gasification into the gasification chamber 305 of the low-temperature gasification furnace 2 can be significantly reduced to achieve high cold gas efficiency.

An integral gasification furnace shown in FIG. 9 is more effective when particles having the function of accelerating a reduction in molecular weight of hydrocarbons such as nickel-molybdenum-base or cobalt-molybdenum-base catalysts, or alkali metals such as sodium or potassium, or either as a simple substance or in the form of a metal oxide of alkaline earth metals such as calcium are used as the fluidized medium of the fluidized bed. The reason for this is as follows: When the molecular weight of hydrocarbons is reduced in the presence of catalyst particles in a reducing atmosphere, the deposition of carbon on the surface of the catalyst and lowering of the function of the catalyst are unavoidable. However, in the case of an integral gasification furnace in which the gasification section and the combustion section are clearly partitioned from each other and are present in the same furnace, and the fluidized medium is circulated through the gasification section and the combustion section, as compared with the internally circulating flow-type fluidized-bed furnace shown in FIG. 5, carbon deposited on the surface of the catalyst can be more reliably combusted and removed in the combustion section. Therefore, catalyst particles recover the catalytic activity with high level again due to the removal of carbon deposited on the particle surface with higher level. The much more effective utilization of the catalyst can be realized.

The exhaust gas discharged from the positive electrode side of the fuel cell 6 also has a high temperature and contains oxygen, and thus can be effectively utilized as a fluidizing gas serving also as a combustion gas in the char combustion chamber 306 of the low-temperature gasification furnace 2. When the operating pressure of the low-temperature gasification furnace is higher than the operating pressure of the fuel cell, the pressure of the exhaust gas should be increased by means of the high-temperature blower before the supply of the exhaust gas into the low-temperature gasification furnace. On the other hand, when the operating pressure of the fuel cell is sufficiently higher than that of the low-temperature gasification furnace, the pressure of the exhaust gas from the fuel cell can be advantageously utilized as it is. In introducing the exhaust gas discharged from the combustion section 304 in the integral gasification furnace into the gas turbine 14, if necessary, dust contained in the gas may be removed through a dust collector such as a cyclone or a ceramic filter.

Further, it is not necessary that the temperature of the gasification chamber 305 is maintained by utilizing the sensible heat through the circulation of the fluidized medium between the char combustion chamber 306 and the gasification chamber 305. Therefore, the residence time of char, circulated together with the fluidized medium, within the gasification chamber can be desirably regulated, and hence various combustibles having different fixed carbon contents, which are difficult to be gasified, can be utilized as the fuel. The other construction of the present embodiment is the same as the construction of the seventh embodiment shown in FIG. 8.

FIG. 10 shows the construction of a fuel cell combined-cycle electric generating system according to the ninth embodiment of the present invention. As with the embodiment shown in FIG. 9, the ninth embodiment of the present invention shown in FIG. 10 is an embodiment in which an integral gasification furnace comprising a gasification chamber, a char combustion chamber and a heat recovery chamber integrated in one furnace has been applied as the low-temperature gasification furnace according to the present invention. In the present embodiment, as with the embodiment shown in FIG. 9, the gasification chamber 305, the char combustion chamber 306 and the heat recovery chamber 307 are provided in the low-temperature gasification furnace 2. In the present embodiment, the raw material 21 is supplied to the gasification chamber 305 in the low-temperature gasification furnace 2 operated at the atmospheric pressure, and the whole char produced in the gasification chamber 305 is supplied to the char combustion chamber 306 where the char is combusted. The exhaust gas discharged from the char combustion chamber 306, together with the exhaust gas discharged from the positive electrode side of the fuel cell 6, is supplied into the waste heat boiler 10 to recover heat. The gas produced in the gasification chamber 305 is passed through the dust collector 3 and the corrosive gas removing apparatus 4, and is then introduced into the fuel reformer 5, the fuel cell 6, and the gas combustor 7, in this order, constructed in an integral form. Regarding the exhaust gas discharged from the negative electrode side of the fuel cell 6, the residual fuel is completely combusted in the gas combustor 7. The combustion gas is then reutilized as a gasifying agent and a fluidizing gas for the gasification chamber 305 in the low-temperature gasification furnace 2. The exhaust gas discharged from the waste heat boiler 10 is induced by the blower 11 to be supplied into the dust collector 18 where ash content is removed from the exhaust gas, and is then discharged. The other construction is the same as that of the embodiment shown in FIG. 2.

FIG. 13 shows the construction of a fuel cell combined-cycle electric generating system according to the tenth embodiment of the present invention. The tenth embodiment shown in FIG. 13 is an embodiment in which the exhaust gas discharged from the negative electrode side of the fuel cell is not circulated. That is, the present embodiment is the same as the system according to the first embodiment shown in FIG. 1, except that the passage through which the exhaust gas discharged from the negative side of the fuel cell 6 is returned to the low-temperature gasification furnace 2 has been removed. Therefore, the exhaust gas discharged from the negative electrode side of the fuel cell 6 is supplied into only the gas combustor 7 and the fuel reformer 5. As a gasifying agent supplied to the fluidized bed, air, oxygen, steam, and a combination of them may be used. The other construction is the same as that of the embodiment shown in FIG. 1.

In the embodiments shown in FIGS. 1 through 13, the molten carbonate fuel cell (MCFC) has been described as a fuel cell by way of examples. The present invention is of course applicable also to the solid electrolyte fuel cell (SOFC). Further, by adding a CO conversion process to convert CO and $H_2O$ contained in the produced gas to $H_2$ and $CO_2$ for thereby removing CO, it is possible to apply the present invention to the phosphoric acid fuel cell and the polymer electrolyte fuel cell. Furthermore, it is also effective that only hydrogen contained in the produced gas is selectively separated through a membrane to which only hydrogen is selectively permeable or through a hydrogen absorbing alloy to generate electricity in the phosphoric acid fuel cell (PAFC) or the polymer electrolyte fuel cell (PEFC).

FIG. 14 shows the construction of a fuel cell combined-cycle electric generating system according to the eleventh embodiment of the present invention. The eleventh embodiment shown in FIG. 14 is a typical embodiment of the present invention in which a CO conversion process has been added. More specifically, a CO shift converter 17 is provided downstream of the fuel reformer 5 so that CO conversion can be carried out. Thus, only hydrogen can be supplied as a fuel gas to the fuel cell 6. In the case where there is a problem of CO leakage from the CO conversion process, a CO gas removing process may be provided after the CO conversion process. The CO gas may be removed by means of a hydrogen-permeable membrane to which only hydrogen is selectively permeable, or alternatively by means of a hydrogen absorbing alloy which can selectively absorb hydrogen only. The other construction is the same as that shown in FIG. 1.

FIG. 15 shows the construction of a fuel cell combined-cycle electric generating system according to the twelfth embodiment of the present invention. The twelfth embodiment shown in FIG. 15 is a typical embodiment of the present invention in which a hydrogen gas selecting process using a hydrogen absorbing alloy is provided after the CO conversion process. According to this embodiment, a CO shift converter 17 is provided downstream of the fuel reformer 5 so that the CO conversion can be carried out. In addition, a hydrogen absorbing alloy 19 is provided downstream of the CO shift converter 17. The hydrogen absorbing alloy 19 can absorb and store hydrogen gas therein in an amount of 1000 times by volume that of the hydrogen absorbing alloy per se. Therefore, the provision of a hydrogen absorbing alloy buffer having a proper capacity can realize the operation of the gasification furnace independently of power generation load on the fuel cell side. This can significantly enhance the degree of freedom of the utilization of the whole system. The working temperature of a hydrogen absorbing alloy based on lanthanum or other rare earth metal, which is currently under development, is around 100°C. Thus, if necessary, a cooler may be provided upstream of the hydrogen absorbing alloy. Hydrogen obtained by the hydrogen absorbing alloy 19 is supplied to the fuel cell 6, while the residual gas joins the exhaust gas discharged from the negative electrode side of the fuel cell 6. A gas holder may be provided instead of the hydrogen absorbing alloy. Specifically, the hydrogen absorbing alloy or the gas holder may be provided as a means for leveling the load of the gasification furnace to supply hydrogen to the fuel cell 6 in accordance with the power generation load, thereby performing power generation which can cope with electric power demand. Since the hydrogen absorbing alloy has the function of selectively adsorbing hydrogen, the CO shift converter 17 may be eliminated when the amount of the CO gas contained in the produced gas is small.

FIG. 17 is a diagram showing the thirteenth embodiment of the present invention. In this embodiment, the integral fluidized-bed gasification furnace described above is used as the low-temperature gasification furnace in the gasification process. The raw material is pressed and fed through the raw material feeder 1 into the low-temperature gasification furnace 2. The low-temperature gasification furnace is an integral gasification furnace operated at the atmospheric pressure or a higher pressure. The gas produced in the low-temperature gasification furnace is introduced into the boiler 16 where the produced gas is cooled to a predetermined temperature. The cooled gas is then introduced into the gas purification process C. The produced gas purified in the gas purifying process is introduced as a fuel gas into the negative electrode of the fuel cell 6 to generate electricity. Although the pressure of the produced gas which is supplied to the fuel cell may vary depending on the type of the fuel cell, this pressure is in the range of 0.2 to 1.0 MPa. Compressed air is supplied as an oxidizing agent to the positive electrode of the fuel cell. The offgas, i.e., exhaust gas, discharged respectively from the positive electrode and the negative electrode in the fuel cell is reutilized respectively as a fluidizing gas in the combustion section 304 and the gasification section 303 in the integral gasification furnace. At this time, the exhaust gas discharged from the fuel cell has a lower pressure than the operating pressure of the integral gasification furnace, and hence the pressure of the exhaust gas is increased by means of pressure-rising blowers 9', 9 to a necessary pressure, and the pressurized exhaust gas is then supplied to the integral gasification furnace. The exhaust gas, which has been discharged from the positive electrode in the fuel cell and supplied into the combustion section 304 in the integral gasification furnace to combust char, is introduced as combustion gas into the waste heat boiler 10 to recover heat. The squeeze of raw materials obtained in the raw material feeder 1 is introduced into the most upstream portion of the boiler 10 where the squeeze of raw materials is mixed with the combustion gas and vaporized. Steam recovered in the boilers 10, 16 can be utilized for driving the steam turbine or utilized in the gas purifying process. Alternatively, the steam may be utilized as a heat source for drying the squeeze of raw materials. When the molten carbonate fuel cell is adopted as the fuel cell, as with the embodiment shown in FIG. 1, a part of the exhaust gas discharged from the negative electrode side of the fuel cell is introduced into the gas combustor 7 to produce carbon dioxide which is supplied together with compressed air to the positive electrode side.

FIG. 18 shows the fourteenth embodiment of the present invention. In this embodiment, the integral fluidized-bed gasification furnace described above is used as the low-temperature gasification furnace in the gasification process, and the high-temperature gasification furnace is further provided. The raw material is pressed and fed through the raw material feeder 1 into the low-temperature gasification furnace 2. The low-temperature gasification furnace comprises an integral gasification furnace operated at the atmospheric pressure or a higher pressure, and the operating temperature is in the range of 400 to 900°C for the gasification chamber 305, and in the range of 800 to 1000°C for the char combustion chamber 306. The gas produced in the integral gasification furnace is introduced into the high-temperature gasification furnace 15, operated at a temperature of 1000 to 1500°C, where char and hydrocarbons are decomposed into hydrogen and carbon monoxide and ash content is slagged. After the gas is cooled to a predetermined temperature in the quenching chamber 15A provided at the lower part of the high-temperature gasification furnace, the gas is introduced into the gas purifying process C. According to the present embodiment in which high-temperature produced gas is under pressure and is cooled through a quenching chamber, the produced gas has a temperature of around 200°C and contains steam in a saturated state. These gas conditions are close to optimal conditions for CO conversion in the downstream gas purifying process, and thus are very advantageous. This is also advantageous in the phosphoric acid fuel cell and the polymer electrolyte fuel cell in which a fuel gas saturated with steam is necessary to be supplied to the fuel cell, because a sufficient amount of steam is previously contained in the produced gas. The produced gas purified in the gas purifying process is introduced as a fuel gas into the negative electrode of the fuel cell 6 to generate electricity. Although the pressure of the produced gas which is supplied to the fuel cell may vary depending on the type of the fuel cell, this pressure is in the range of 0.2 to 1.0 MPa. Compressed air is supplied as an oxidizing agent to the positive electrode of the fuel cell. The offgas, i.e., exhaust gas, discharged respectively from the positive electrode and the negative electrode in the fuel cell is reutilized respectively as a fluidizing gas in the combustion section 304 and the gasification section 303 in the integral gasification furnace. At this time, the exhaust gas discharged from the fuel cell has a lower pressure than the operating pressure of the integral gasification furnace, and hence the pressure of the exhaust gas is increased by means of pressure-rising blowers 9', 9 to a necessary pressure, and the pressurized exhaust gas is then supplied to the integral gasification furnace. The exhaust gas, which has been discharged from the positive electrode in the fuel cell and supplied into the combustion section in the integral gasification furnace to combust char, is introduced as combustion gas into the waste heat boiler 10 to recover heat. At this time, a part of the combustion gas is supplied to the high-temperature gasification furnace. This is because this combustion gas has a high temperature of around 900°C and contains oxygen, and thus can be utilized as an oxidizing agent in the high-temperature gasification furnace, and carbon dioxide contained in the combustion gas can effectively function as a gasifying agent in the high-temperature gasification furnace. The other construction is the same as the embodiment shown in FIG. 17.

FIG. 19 shows the fifteenth embodiment of the present invention. This embodiment is another embodiment in which the integral fluidized-bed gasification furnace described above is used as the low-temperature gasification furnace in the gasification process and the high-temperature gasification furnace is further provided. The gas produced in the integral gasification furnace is introduced into the high-temperature gasification furnace 15, operated at 1000 to 1500°C, where char and hydrocarbons are decomposed into hydrogen and carbon monoxide and ash content is slagged. The produced gas discharged from the high-temperature gasification furnace 15 is then introduced into the boiler 16 where the gas is cooled to a predetermined temperature, and the cooled gas is then introduced into the gas purifying process C. The other construction is the same as that of the embodiment shown in FIG. 18.

FIG. 20 shows the sixteenth embodiment of the present invention. In this embodiment, an integral fluidized-bed gasification furnace of atmospheric pressure type is used as the low-temperature gasification furnace in the gasification process. The raw material is pressed and fed through the raw material feeder 1 into the low-temperature gasification furnace 2. The low-temperature gasification furnace comprises an integral gasification furnace operated at the atmospheric pressure or a lower pressure, and the operating temperature and other conditions are the same as those described above. The gas produced in the integral gasification furnace is passed through the dust collector 3, and introduced into the boiler 16 where the produced gas is cooled to a predetermined temperature, and the cooled gas is then introduced into the gas purifying process C. The produced gas purified in the gas purification process is pressurized by means of a gas compressor 20 to a necessary pressure, and the pressurized produced gas is introduced as a fuel gas into the negative electrode of the fuel cell 6 to generate electricity. Although the pressure of the produced gas supplied to the fuel cell may vary depending on the type of the fuel cell, this pressure is in the range of 0.2 to 1.0 MPa. The gas compressor is not necessarily required to be provided downstream of the gas purification process. If necessary, the gas compressor may be provided upstream of the gas purification process C or between steps constituting the gas purification process. When the hydrogen purifying process using a hydrogen absorbing alloy is included in the gas purification process C, hydrogen having a high pressure of not less than 0.5 MPa can be taken out from the hydrogen absorbing alloy, and hence the compressor is not necessary. Compressed air is supplied as an oxidizing agent to the positive electrode of the fuel cell. The offgas, i.e., exhaust gas, discharged respectively from the positive electrode and the negative electrode in the fuel cell is reutilized respectively as a fluidizing gas in the combustion section 304 and the gasification section 303 in the integral gasification furnace. At this time, the exhaust gas discharged from the fuel cell has a sufficiently higher pressure than the operating pressure of the integral gasification furnace, and therefore, if necessary, the energy of pressure of the exhaust gas may be recovered as power by means of gas expanders 28', 28, and then the exhaust gas may be introduced into the integral gasification furnace. The exhaust gas, which has been discharged from the positive electrode side in the fuel cell and supplied into the combustion section 304 in the integral gasification furnace to combust char, is introduced as combustion gas into the waste heat boiler 10 to recover heat. The other construction is the same as that of the embodiment shown in FIG. 17.

FIG. 21 shows the seventeenth embodiment of the present invention. In this embodiment, an integral fluidized-bed gasification furnace of atmospheric pressure type is used as the low-temperature gasification furnace in the gasification process and the high-temperature gasification furnace is further provided. The gas produced in the integral gasification furnace operated at the atmospheric pressure or a lower pressure is passed through the dust collector 3, and introduced into the high-temperature gasification furnace 15, operated at 1000 to 1500°C, where char and hydrocarbons are decomposed into hydrogen and carbon monoxide and ash content is slagged. The produced gas discharged from the high-temperature gasification furnace 15 is then introduced into the boiler 16 where the gas is cooled to a predetermined temperature, and the cooled gas is then introduced into the gas purifying process C. The produced gas purified in the gas purifying process is introduced as a fuel gas into the negative electrode of the fuel cell 6 to generate electricity. Although the pressure of the produced gas supplied to the fuel cell may vary depending on the type of the fuel cell, this pressure is in the range of 0.2 to 1.0 MPa. The gas compressor is not necessarily required to be provided downstream of the gas purification process. If necessary, the gas compressor may be provided upstream of the gas purification process C or between steps constituting the gas purification process. As with the embodiment shown in FIG. 21, when the hydrogen purifying process using a hydrogen absorbing alloy is included in the gas purification process C, the compressor can be eliminated. Compressed air is supplied as an oxidizing agent to the positive electrode of the fuel cell. The offgas, i.e., exhaust gas, discharged respectively from the positive electrode and the negative electrode in the fuel cell is reutilized respectively as a fluidizing gas in the combustion section 304 and the gasification section 303 in the integral gasification furnace. At this time, the exhaust gas discharged from the fuel cell has a sufficiently higher pressure than the operating pressure of the integral gasification furnace, and therefore, if necessary, the energy of pressure of the exhaust gas may be recovered as power by means of gas expanders 28', 28, and then the exhaust gas may be introduced into the integral gasification furnace. The exhaust gas, which has been discharged from the positive electrode side and supplied into the combustion section in the integral gasification furnace to combust char, is introduced as combustion gas into the waste heat boiler 10 to recover heat. At this time, a part of the combustion gas is supplied to the high-temperature gasification furnace 15. This is because this combustion gas has a high temperature of around 900°C and contains oxygen, and thus can be utilized as an oxidizing agent in the high-temperature gasification furnace, and carbon dioxide contained in the combustion gas can effectively function as a gasifying agent in the high-temperature gasification furnace. Further, if necessary, a dust collector 3' may be provided before the waste heat boiler 10 to collect ash content, and the collected ash content is then introduced into the high-temperature gasification furnace 15 and slagged therein. The other construction is the same as that of the embodiment shown in FIG. 17.

FIG. 22 shows the eighteenth embodiment of the present invention. In this embodiment, the circulating flow-type fluidized-bed gasification furnace is used as the low-temperature gasification furnace in the gasification process and the high-temperature gasification furnace is further provided. The gas produced in the low-temperature gasification furnace 2 operated at the atmospheric pressure or a lower pressure is introduced into the high-temperature gasification furnace 15, operated at 1000 to 1500°C, where char and hydrocarbons are decomposed into hydrogen and carbon monoxide and ash content is slagged. The produced gas discharged from the high-temperature gasification furnace 15 is then introduced into the boiler 16 where the gas is cooled to a predetermined temperature, and the cooled gas is then introduced into the gas purifying process C. The produced gas purified in the gas purifying process C is introduced as a fuel gas into the negative electrode of the fuel cell 6 to generate electricity. According to the present embodiment, the corrosive gas removing process 4 in the gas purifying process C is composed of a wet-type dechlorination process and a desulfurizing process. The produced gas discharged from the wet-type dechlorination process is pressurized by means of the gas compressor 20 to a predetermined pressure, and then introduced into the desulfurizing process. Although the pressure of the produced gas supplied to the fuel cell may vary depending on the type of the fuel cell, this pressure is in the range of 0.2 to 1.0 MPa. According to the present embodiment, the exhaust gas discharged from the fuel cell is in the pressurized state, and therefore both of the exhaust gas discharged from the positive electrode side and the negative electrode side are introduced into an offgas burner to recover the energy of the combustible gas contained in the exhaust gas discharged from the negative electrode side and the energy of pressure as power, and to compress air to be supplied to the positive electrode of the fuel cell by a turbocharger. The exhaust gas of the fuel cell whose pressure has been released in the turbocharger is then introduced into the waste heat boiler 10 to recover heat.

The squeeze of raw materials generated in the raw material feeder 1 is introduced into the drier 30 where the squeeze of raw materials is heated, and evaporated and dried by means of steam produced in the boiler 10 and/or the boiler 16. Exhaust vapor emitted from the squeeze of raw materials has an offensive smell and thus is mixed into the high-temperature gas in the boiler 10 and/or the boiler 16 to decompose the smell. Although the squeeze of raw materials can be mixed directly into the high-temperature gas in the boiler 10 and/or the boiler 16 without being dried by the drier. However, vaporization and drying of the squeeze of raw materials in the outside of the system followed by the supply of only the produced exhaust vapor to the heat recovery process is expected to have an advantage, over blowing of the squeeze of raw materials into the heat recovery process as it is, that the magnitude of lowering of gas temperature is so small that the amount of evaporation in the heat recovery process can be increased. In particular, as in this embodiment, in the case where a high-temperature gasification furnace operated at 1000 to 1500°C is used in the gasification process and the heat recovery process is provided downstream of the high-temperature gasification furnace, such construction is very advantageous. This is because the temperature of the produced gas introduced into the heat recovery process is as high as around 1300°C, the heat transfer in the heat recovery process is governed by radiation heat transfer, and hence the degree of an increase in the quantity of heat recovered by keeping the gas at a high temperature is large.

In the embodiments shown in FIGS. 1 through 22, combinations of various apparatuses used in the processes from the gasification to the power generation in the fuel cell have been exemplified. Other combinations of apparatuses than exemplified using apparatuses shown in FIGS. 1 through 22 are also possible.

As is apparent from the foregoing description, according to the present invention, combustibles can be gasified to produce gas, and the produced gas is then utilized in a chemical reaction to generate electricity with high efficiency.

Further, according to the present invention, the gas produced in the gasification furnace is supplied to power generation equipment to generate electricity, and the exhaust gas containing a large amount of steam after the power generation is reutilized as a gasifying agent in the low-temperature gasification furnace. Thus, the reutilization of the sensible heat of exhaust gas as a heat source for gasification can reduce the necessary amount of the partial combustion of combustibles, and improve the gasification efficiency. Further, the exhaust gas containing a large amount of steam can contribute to the acceleration of the gasification reaction by the steam reforming effect which also can improve the gasification effect.

Furthermore, according to the present invention, combustibles such as combustible wastes or coal is stably gasified in the low-temperature gasification furnace to produce gas, components poisonous to a fuel cell are removed from the produced gas, and then the purified gas is introduced into the fuel cell to generate electricity with high efficiency.

## Industrial Applicability

The present invention relates to an energy conversion technology for converting chemical energy of combustibles to electric energy with high efficiency. The present invention can be utilized in an electric generating system in which combustibles such as combustible wastes or coal are gasified to produce gas, and the produced gas is then utilized as a fuel gas in a fuel cell to generate electricity.

## Claims

1. An electric generating system by gasification of combustibles, **characterized in that** combustibles are gasified to produce gas, and the produced gas is then used in a chemical reaction to generate electricity.

2. An electric generating system by gasification of combustibles, **characterized in that** combustibles are gasified to produce gas, and the produced gas is used in a fuel cell to generate electricity.

3. An electric generating system by gasification of combustibles, **characterized in that** combustibles are gasified in a fluidized-bed furnace to produce gas, and the produced gas is then used in a fuel cell to generate electricity.

4. An electric generating system by gasification of combustibles, **characterized in that** combustibles are gasified to produce gas, and the produced gas is reformed, and the reformed gas is then used in a fuel cell to generate electricity.

5. An electric generating system by gasification of combustibles, **characterized in that** combustibles are gasified to produce gas, and the produced gas is then used in a fuel cell to generate electricity, while waste heat produced in said fuel cell is used as a heat source for the gasification.

6. An electric generating system by gasification of combustibles, **characterized in that** combustibles are gasified to produce gas, and the produced gas is used in a fuel cell to generate electricity, while exhaust gas discharged from said fuel cell is introduced into the gasification process to utilize the exhaust gas for the gasification.

7. An electric generating system by gasification of combustibles, **characterized in that** combustibles are gasified in an integrated type fluidized-bed gasification furnace having a gasification chamber, a char combustion chamber, and a heat recovery chamber in one furnace to produce gas, and the produced gas is then used in a fuel cell to generate electricity.

8. An electric generating system by gasification of combustibles according to any one of claims 1 to 7, **characterized in that** the combustibles are wastes and/or coal.

9. An electric generating system by gasification of combustibles according to any one of claims 1 to 7, **characterized in that** the gasification process comprises a low-temperature gasification process and a high-temperature gasification process.

10. An electric generating system by gasification of combustibles according to claim 9, **characterized in that** the low-temperature gasification process is operated at a temperature of 400 to 1,000°C.

11. An electric generating system by gasification of combustibles according to claim 9, **characterized in that** the high-temperature gasification process is operated at a temperature of 1,000 to 1,500°C.

12. An electric generating system by gasification of combustibles according to any one of claims 1 to 7, **characterized in that** the gasification process is operated at a temperature of 400 to 1,000°C.

13. An electric generating system by gasification of combustibles according to any one of claims 1 to 7, **characterized in that** the gasification process is operated at atmospheric pressure or higher pressure.

14. An electric generating system by gasification of combustibles according to any one of claims 1 to 7, **characterized in that** a gasifying agent in the gasification process comprises one of air, oxygen, carbon dioxide, and steam, or a combination of two or more of them.

15. An electric generating system by gasification of combustibles according to claim 4, **characterized in that** the produced gas is reformed in the temperature range of 700 to 800°C in the presence of a catalyst.

16. An electric generating system by gasification of combustibles according to claim 1, 2, 3, 4, or 7, **characterized in that** exhaust gas after the generation of electricity is introduced into the gasification process to utilize the exhaust gas for the gasification.

17. An electric generating system by gasification of combustibles according to any one of claims 1 to 7, **characterized in that** the gas produced in the gasification process is pressurized and then supplied into the fuel cell to generate electricity.

**18.** An electric generating system by gasification of combustibles according to claim 4, **characterized in that** the produced gas is reformed by low-temperature plasma.

**19.** An electric generating system by gasification of combustibles according to any one of claims 1 to 7, **characterized in that** the gas produced in the gasification process is cooled to 650°C or below and then introduced into the fuel cell to generate electricity.

**20.** An electric generating system by gasification of combustibles according to claim 6 or 16, **characterized in that** the exhaust gas, which is discharged from the fuel cell and introduced into the gasification process, is exhaust gas discharged from the negative electrode (anode) side.

**21.** An electric generating system by gasification of combustibles according to claim 1, 2, 4, 5, or 6, **characterized in that** the gasification process is carried out in a fluidized-bed furnace.

**22.** An electric generating system by gasification of combustibles according to claim 3 or 21, **characterized in that** the gasification process is carried out in an integral fluidized-bed gasification furnace having, in one furnace, a gasification chamber, a char combustion chamber, and a heat recovery chamber.

**23.** An electric generating system by gasification of combustibles according to claim 21, **characterized in that** the exhaust gas discharged from the fuel cell is utilized as a fluidizing gas in the fluidized-bed furnace.

**24.** An electric generating system by gasification of combustibles according to claim 9, **characterized in that**, in the high-temperature gasification process, ash content contained in the combustibles is discharged as molten slag.

**25.** An electric generating system by gasification of combustibles according to claim 9, **characterized in that** the gas produced in the high-temperature gasification process, together with molten slag, is quenched.

**26.** An electric generating system by gasification of combustibles according to claim 9, **characterized in that** the exhaust gas discharged from the fuel cell is utilized as a gasifying agent in the low-temperature gasification process and/or the high-temperature gasification process.

**27.** An electric generating system by gasification of combustibles according to any one of claims 2 to 7, **characterized in that** the fuel gas is passed through a CO shift process provided downstream of the reforming process and then introduced into the fuel cell.

**28.** An electric generating system by gasification of combustibles according to any one of claims 2 to 7, **characterized in that** the fuel gas is passed through a CO shift process and is further passed through a CO removal process, and then introduced into the fuel cell, the CO shift process and the CO removal process being provided downstream of the reforming process.

**29.** An electric generating system by gasification of combustibles according to any one of claims 2 to 7, **characterized in that** the fuel gas is passed through a CO shift process and a CO removal process, and further treated through a hydrogen absorbing alloy or a hydrogen-permeable membrane to prepare pure hydrogen or enriched hydrogen which is then introduced into the fuel cell, the CO shift process and the CO removal process being provided downstream of the reforming process.

**30.** An electric generating system by gasification of combustibles according to any one of claims 2 to 7, **characterized in that** the temperature of the fuel gas introduced into the fuel cell is lower than the operating temperature of the gasification process.

**31.** An electric generating system by gasification of combustibles according to claim 30, **characterized in that** the temperature of the fuel gas introduced into the fuel cell is around 100°C.

**32.** An electric generating system by gasification of combustibles according to claim 30, **characterized in that** the temperature of the fuel gas introduced into the fuel cell is in the range of 600 to 700°C.

**33.** An electric generating system by gasification of combustibles according to any one of claims 2 to 7, **characterized in that** the gas produced in the gasification process is reformed by low-temperature plasma.

**34.** An electric generating system by gasification of combustibles according to any one of claims 1 to 7, **characterized in that**, prior to the introduction of the combustibles into the gasification process, the combustibles are squeezed to lower water content of the combustibles.

**35.** An electric generating system by gasification of combustibles according to claim 34, **characterized in that** the squeeze of raw materials is introduced into a waste heat boiler provided downstream of the gasification process and/or an exhaust gas discharged from the positive electrode (cathode) in the fuel cell to be dried.

**36.** An electric generating system by gasification of combustibles according to claim 34, **characterized in that** the squeeze of raw materials is dried by utilizing heat obtained in cooling the gas produced in the gasification process and/or waste heat generated from the fuel cell.

**37.** An electric generating system by gasification of combustibles according to claim 17, **characterized in that** the fuel gas supplied into the fuel cell has a pressure of 0.2 to 1.0 MPa.

**38.** An electric generating system by gasification of combustibles according to claim 22, **characterized in that** an exhaust gas discharged from the negative electrode (anode) in the fuel cell is introduced into the gasification chamber in the integral fluidized-bed gasification furnace and an exhaust gas discharged from the positive electrode (cathode) is introduced into the char combustion chamber in the integral fluidized-bed gasification furnace, the introduced exhaust gases being utilized as a fluidizing gas in the gasification chamber and the char combustion chamber.

**39.** An electric generating system by gasification of combustibles according to claim 3, 7, 21, or 22, **characterized in that** a reforming catalyst is used as a part or the whole of a fluidized medium in the fluidized bed.

**40.** An electric generating system by gasification of combustibles according to any one of claims 1 to 7, **characterized in that** the gas produced in the gasification process is introduced into a fixed-bed reactor or a moving-bed reactor packed with a reforming catalyst and reformed.

**41.** An electric generating system by gasification of combustibles according to claim 40, **characterized in that** the material to be packed into the fixed-bed reactor or the moving-bed reactor comprises CaO.

**42.** An electric generating system by gasification of combustibles according to any one of claims 1 to 7, **characterized in that** the produced gas discharged from the low-temperature gasification furnace is separated into a solid component and a gas component in a dust collector in the temperature range of 400 to 650°C and only the gas component is supplied to electric generating equipment.

**43.** An electric generating system by gasification of combustibles according to claim 9, **characterized in that** both a low-temperature gasification furnace used in the low-temperature gasification process and a high-temperature gasification furnace used in the high-temperature gasification process are operated under pressure and the produced gas is used to operate the electric generating equipment, a gas turbine, and a steam turbine, thereby performing three-stage combined cycle power generation.

**44.** An electric generating system by gasification of combustibles according to any one of claims 1 to 7, **characterized in that**, prior to power generation utilizing the produced gas, the produced gas is stored in load leveling means for the gasification furnace such as a hydrogen absorbing alloy or a gas holder and supplied to electric generating equipment according to the load of power generation.

FIG.1

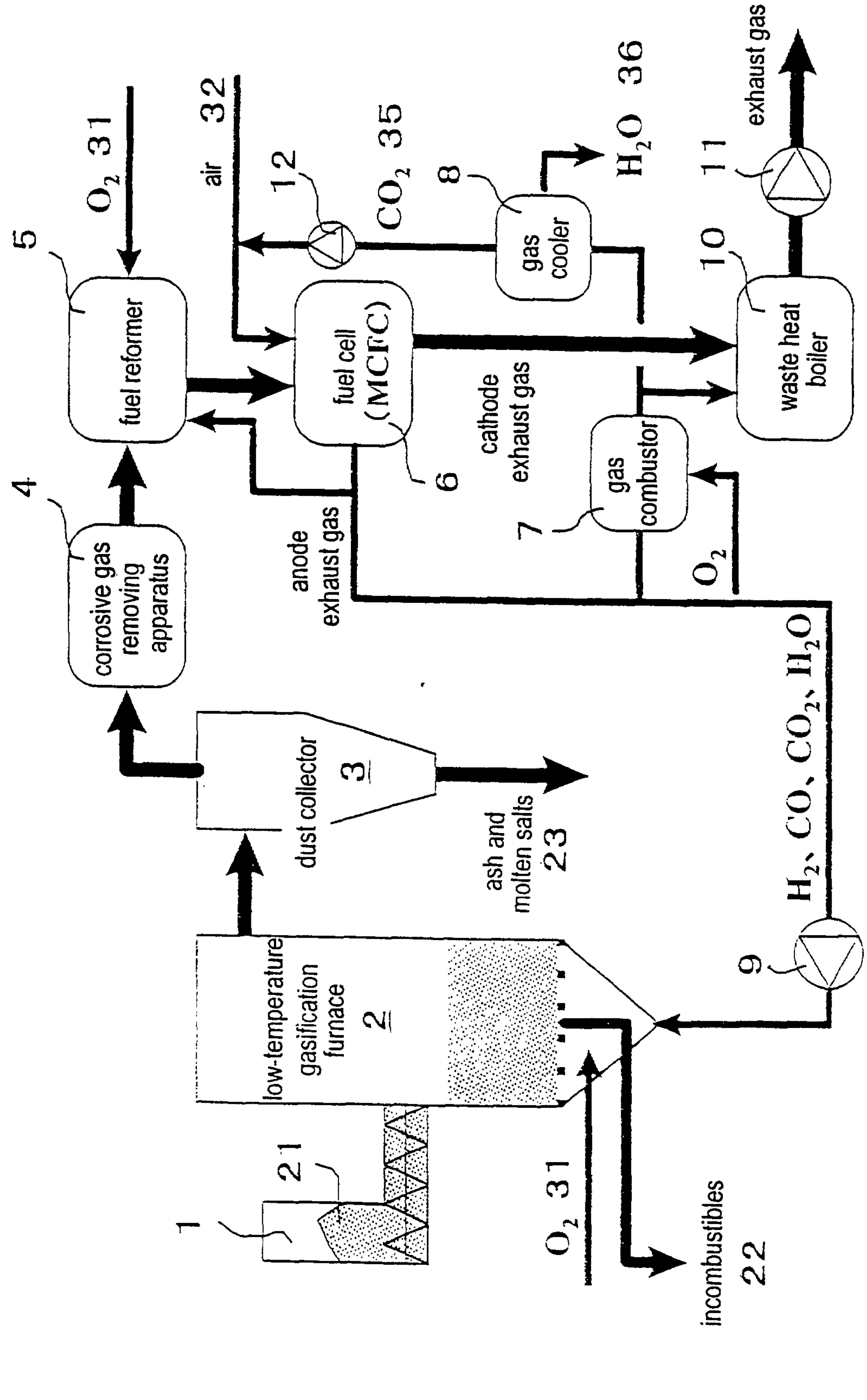
1
21
low-temperature gasification furnace
2
$O_2$ 31
incombustibles
22
dust collector
3
ash and molten salts
23
corrosive gas removing apparatus
4
fuel reformer
5
$O_2$ 31
fuel cell (MCFC)
6
air 32
12
$CO_2$ 35
anode exhaust gas
cathode exhaust gas
gas combustor
7
$O_2$
gas cooler
8
$H_2O$ 36
waste heat boiler
10
11
exhaust gas
9
$H_2$、CO、$CO_2$、$H_2O$

FIG.2

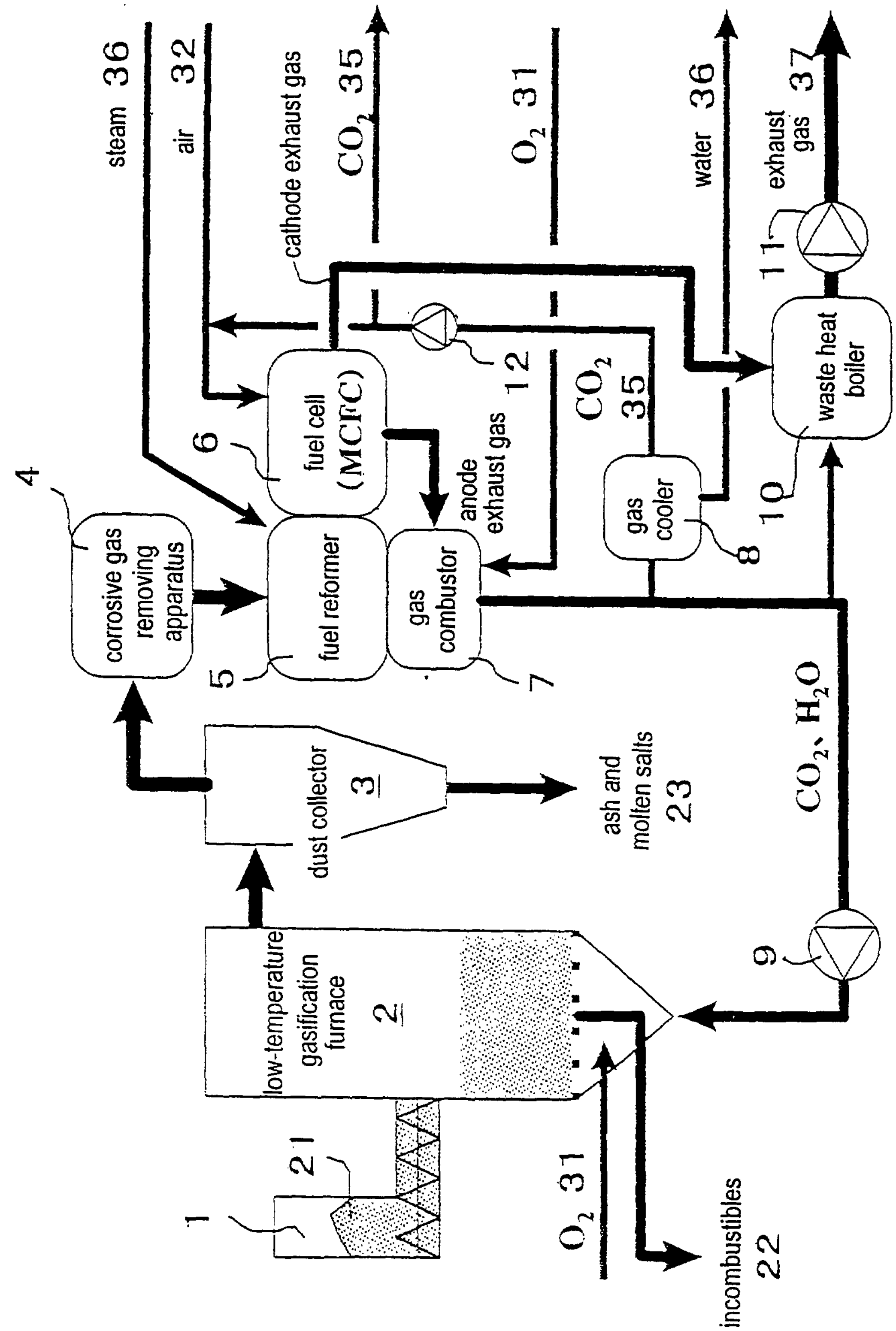
steam 36
air 32
cathode exhaust gas
$CO_2$ 35
$O_2$ 31
water 36
exhaust gas 37
4
corrosive gas removing apparatus
fuel reformer
5
6
fuel cell (MCFC)
gas combustor
7
anode exhaust gas
12
$CO_2$ 35
gas cooler
8
waste heat boiler
10
11
dust collector
3
ash and molten salts
23
$CO_2$、$H_2O$
9
low-temperature gasification furnace
2
1
21
$O_2$ 31
incombustibles
22

*FIG.3*

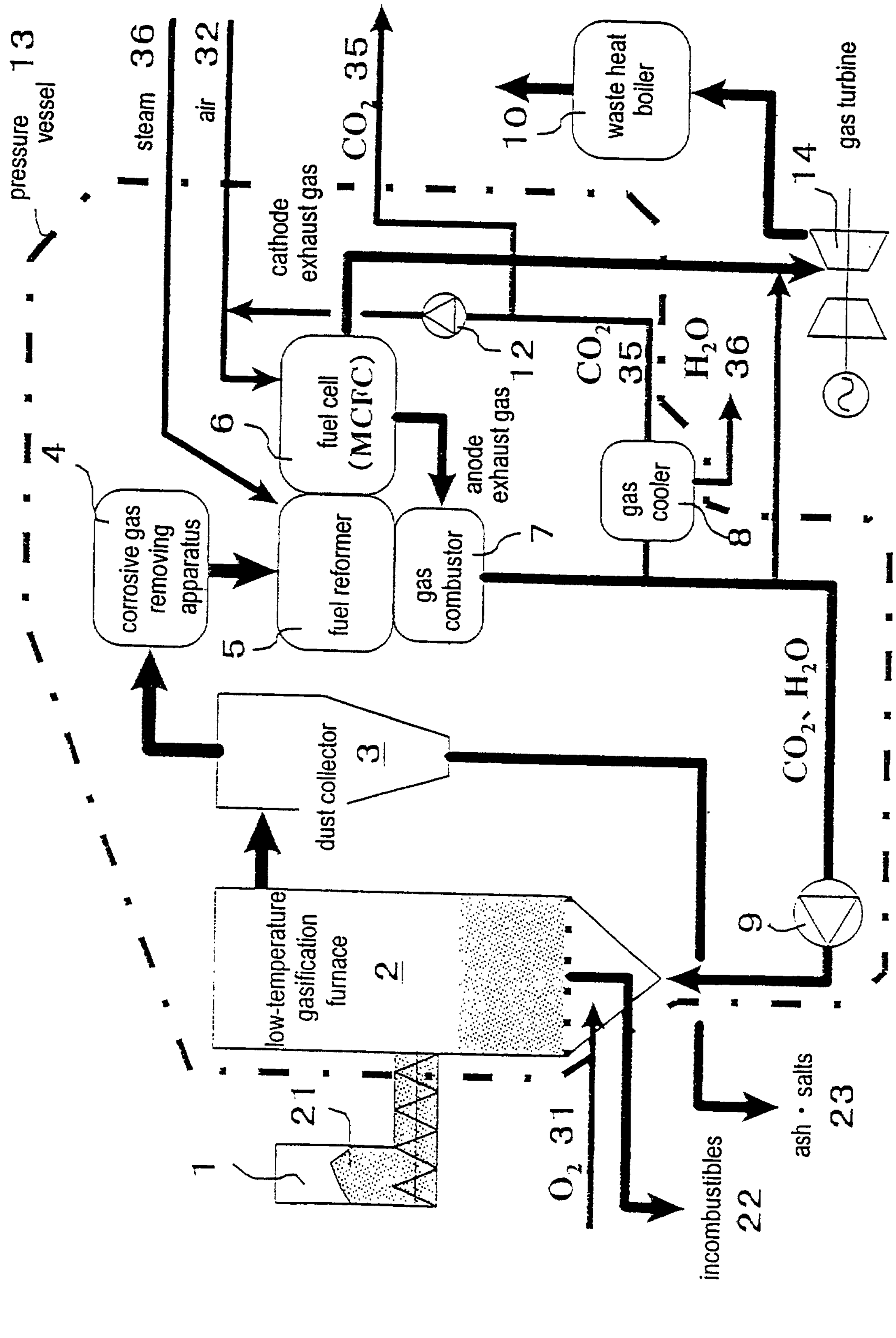
pressure vessel
13
steam
36
air
32
$CO_2$
35
cathode exhaust gas
waste heat boiler
10
14
gas turbine
12
$CO_2$
35
$H_2O$
36
6
fuel cell (MCFC)
anode exhaust gas
4
corrosive gas removing apparatus
fuel reformer
5
gas combustor
7
gas cooler
8
dust collector
3
$CO_2$、$H_2O$
9
low-temperature gasification furnace
2
1
21
$O_2$ 31
incombustibles
22
ash · salts
23

FIG.4

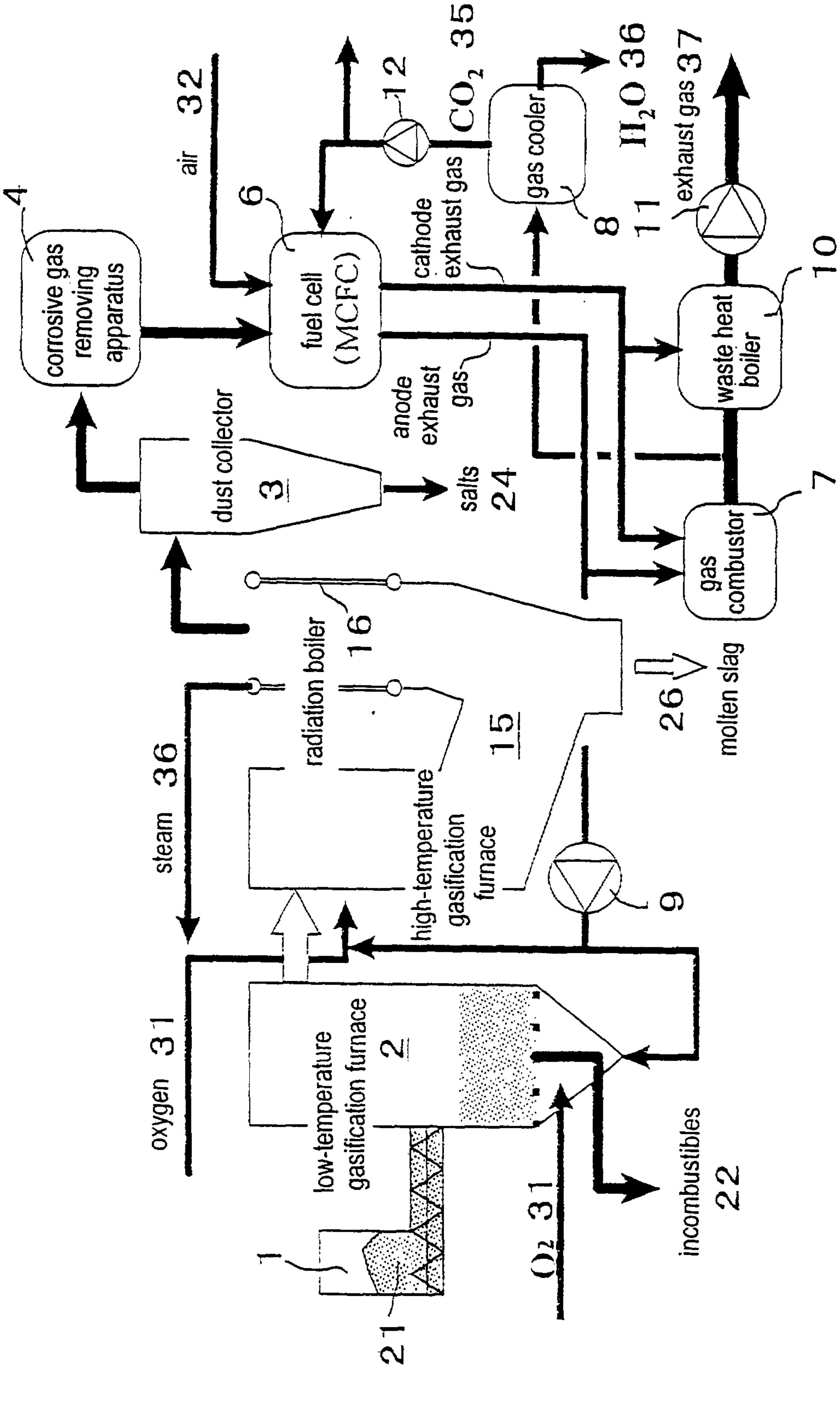

corrosive gas removing apparatus
4
air 32
6
fuel cell (MCFC)
12
CO2 35
cathode exhaust gas
gas cooler
8
H2O 36
11
exhaust gas 37
10
waste heat boiler
anode exhaust gas
dust collector
3
salts 24
gas combustor
7
radiation boiler
16
15
26
molten slag
steam 36
high-temperature gasification furnace
9
oxygen 31
low-temperature gasification furnace
2
1
21
O2 31
incombustibles 22

FIG.5

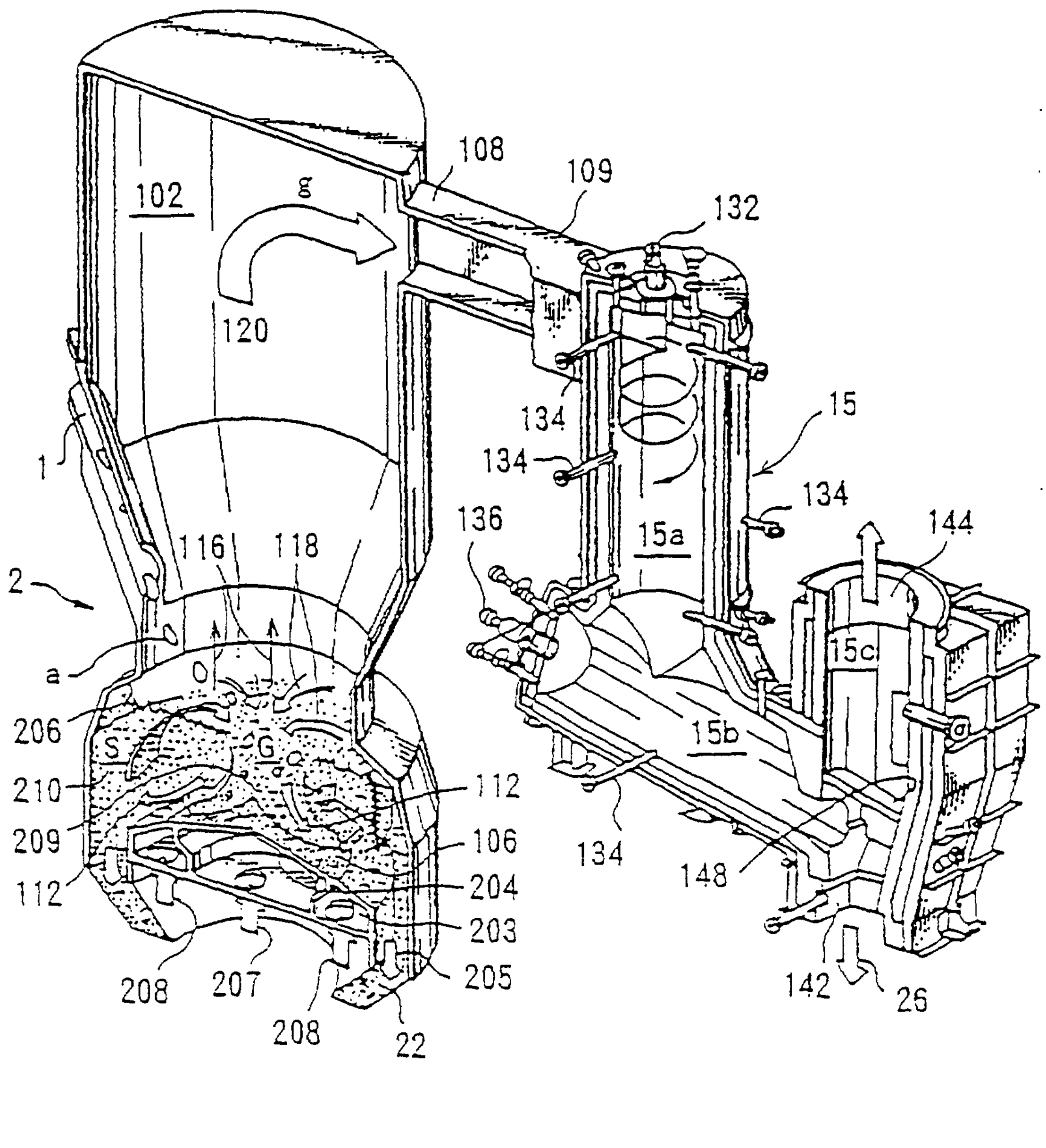
102
g
108
109
132
120
134
15
1
134
134
136
15a
144
116
118
2
a
15c
206
S
G
15b
210
112
209
106
134
148
112
204
203
208
207
205
142
26
208
22

FIG.6

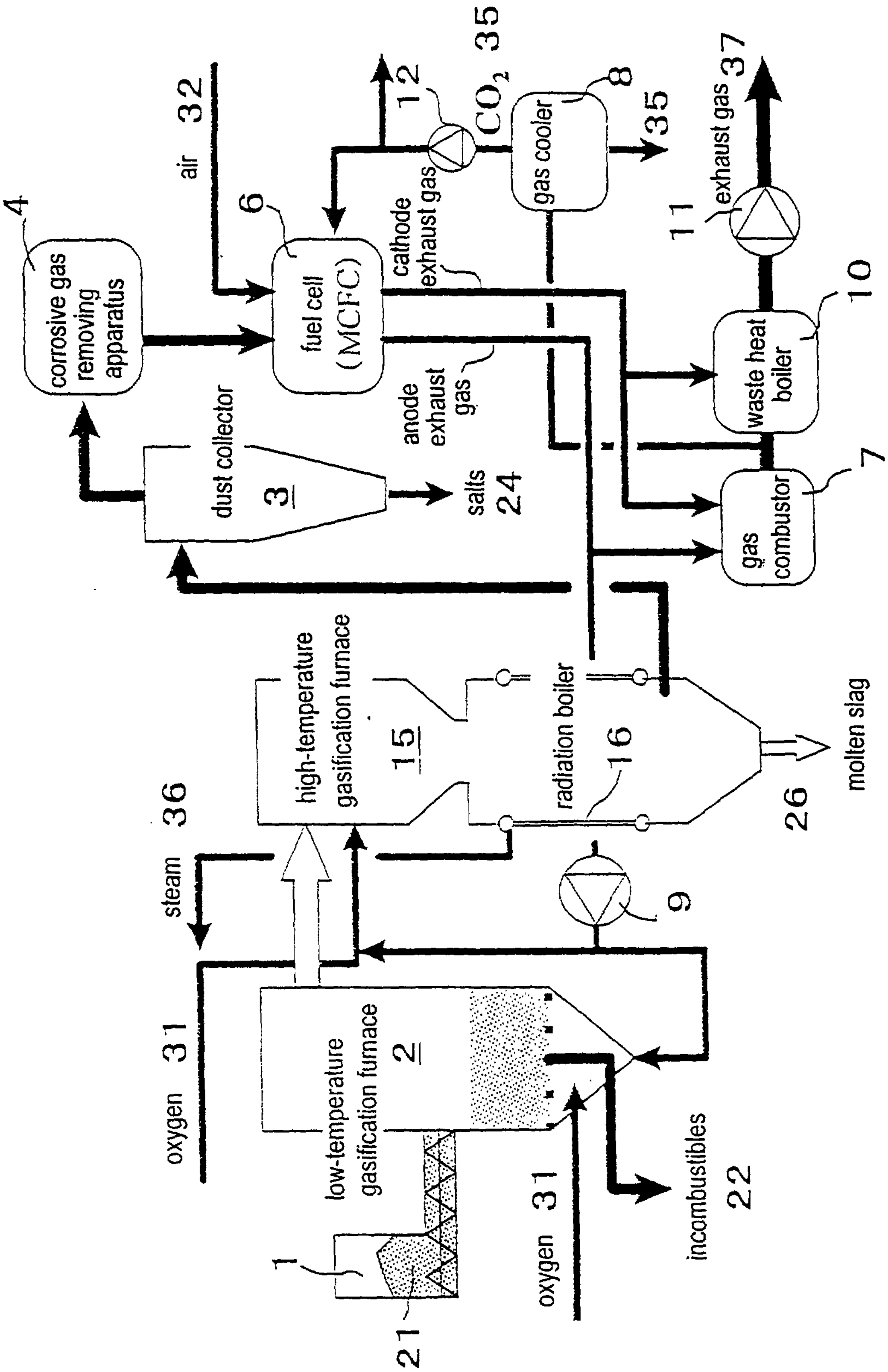

corrosive gas removing apparatus
4
dust collector
3
salts
24
air
32
fuel cell (MCFC)
6
cathode exhaust gas
anode exhaust gas
12
$CO_2$
35
gas cooler
8
35
exhaust gas
37
11
waste heat boiler
10
gas combustor
7
high-temperature gasification furnace
15
radiation boiler
16
molten slag
26
steam
36
9
oxygen
31
low-temperature gasification furnace
2
1
21
oxygen
31
incombustibles
22

FIG.7

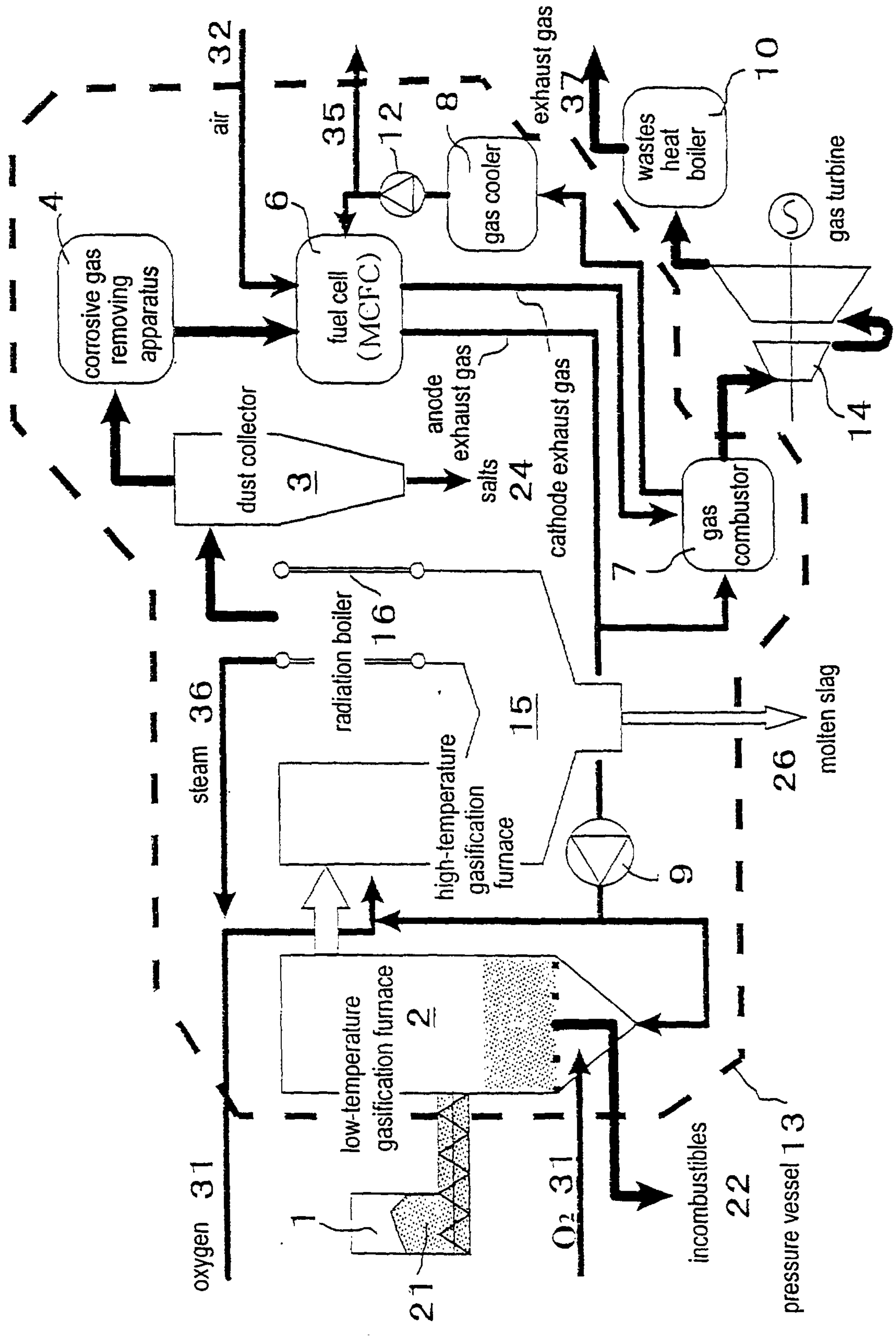
air
32
35
12
8
exhaust gas
37
10
corrosive gas removing apparatus
4
6
fuel cell (MCFC)
gas cooler
wastes heat boiler
gas turbine
anode exhaust gas
cathode exhaust gas
dust collector
3
salts
24
gas combustor
7
14
radiation boiler
16
15
steam
36
high-temperature gasification furnace
molten slag
26
9
low-temperature gasification furnace
2
oxygen
31
$O_2$ 31
1
21
incombustibles
22
pressure vessel 13

FIG.8

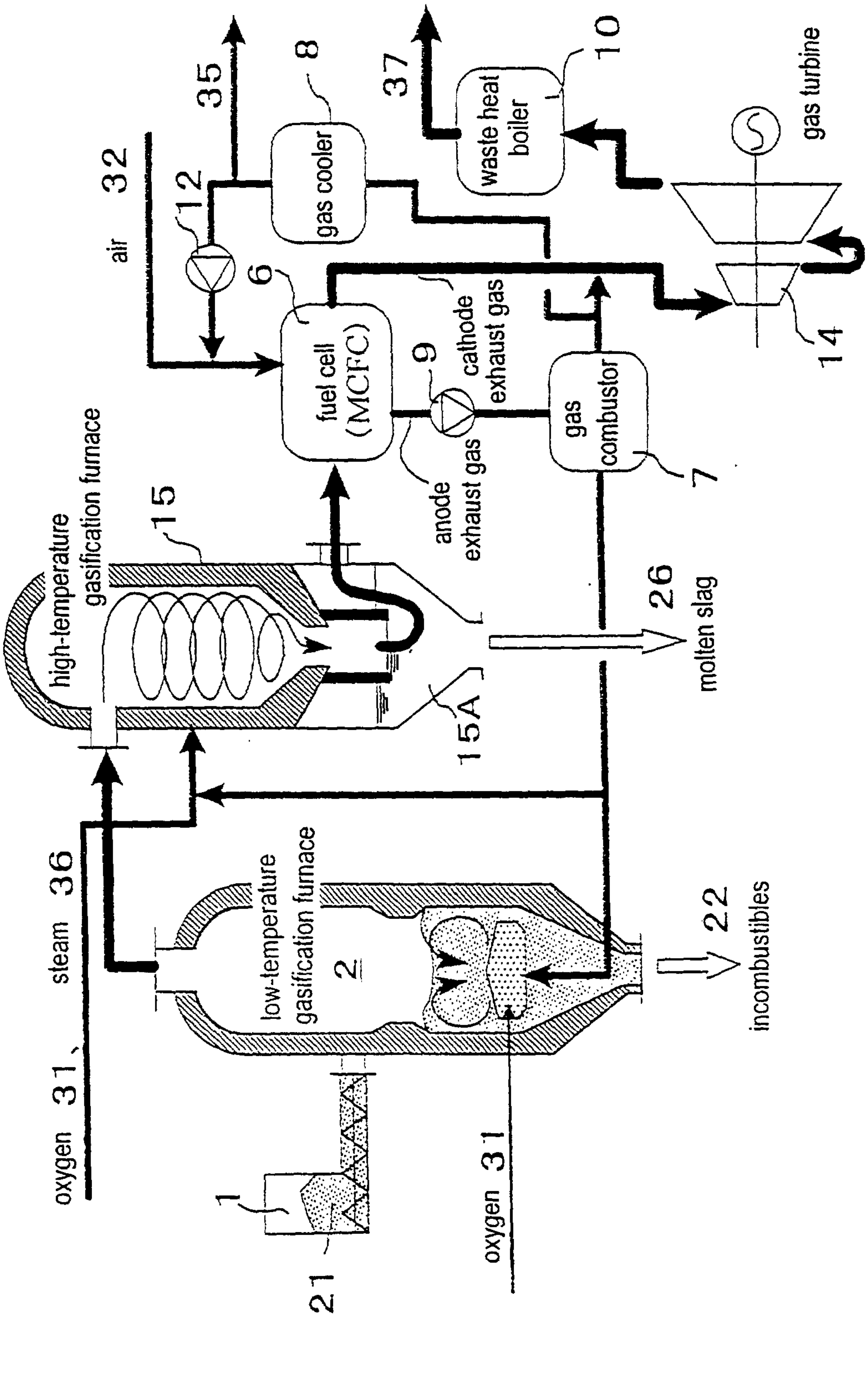
oxygen 31
steam 36
low-temperature gasification furnace
2
1
21
oxygen 31
22
incombustibles
high-temperature gasification furnace
15
15A
26
molten slag
fuel cell (MCFC)
6
anode exhaust gas
9
cathode exhaust gas
gas combustor
7
air
32
12
35
gas cooler
8
37
waste heat boiler
10
14
gas turbine

FIG.9

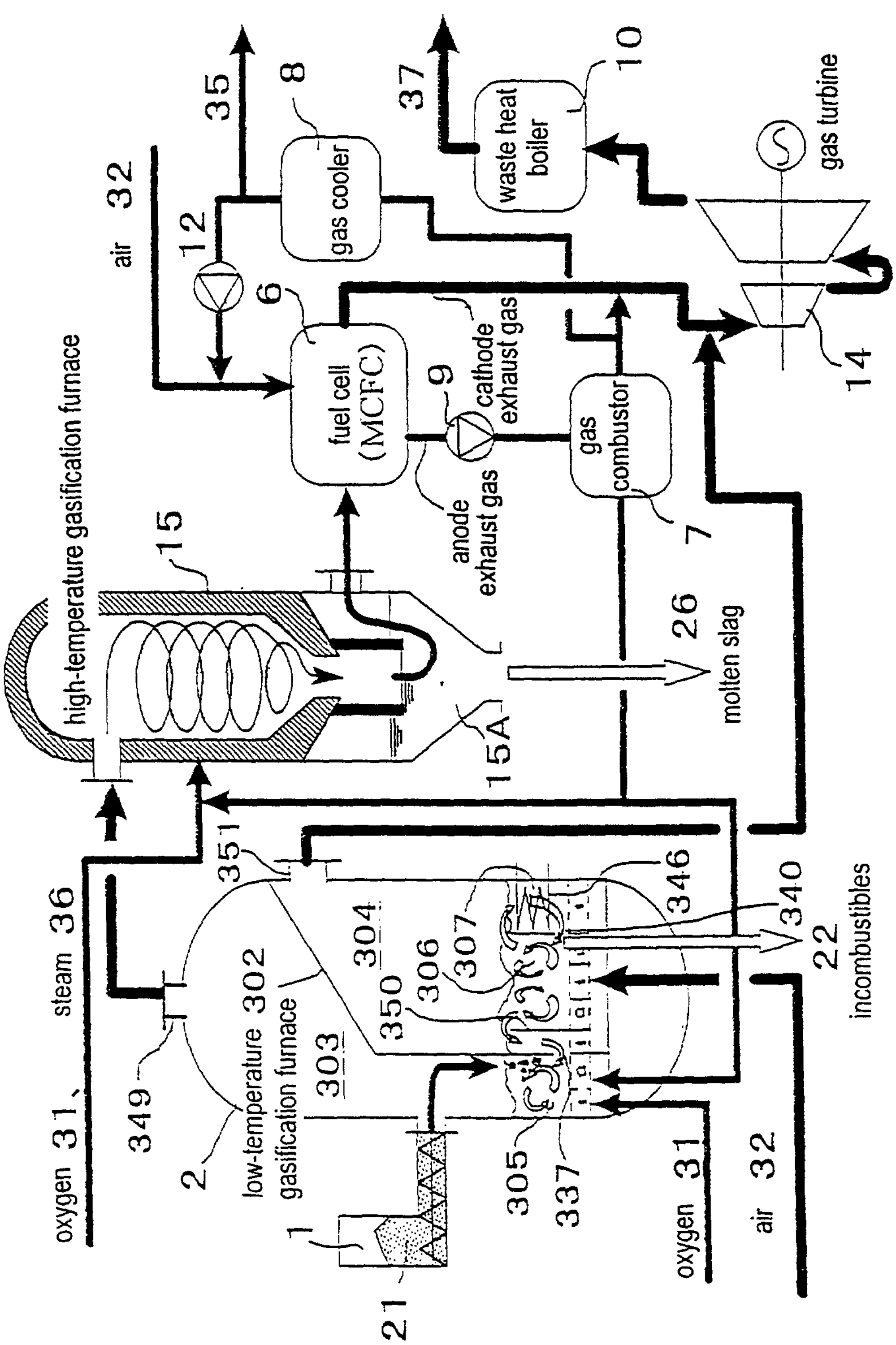
high-temperature gasification furnace
15
15A
26
molten slag
fuel cell
(MCFC)
6
9
anode
exhaust gas
cathode
exhaust gas
gas
combustor
7
air
32
12
gas cooler
8
35
waste heat
boiler
10
37
gas turbine
14
oxygen
31
steam
36
349
2
low-temperature
gasification furnace
302
303
304
350
306
307
351
346
340
22
incombustibles
305
337
1
21

FIG.10

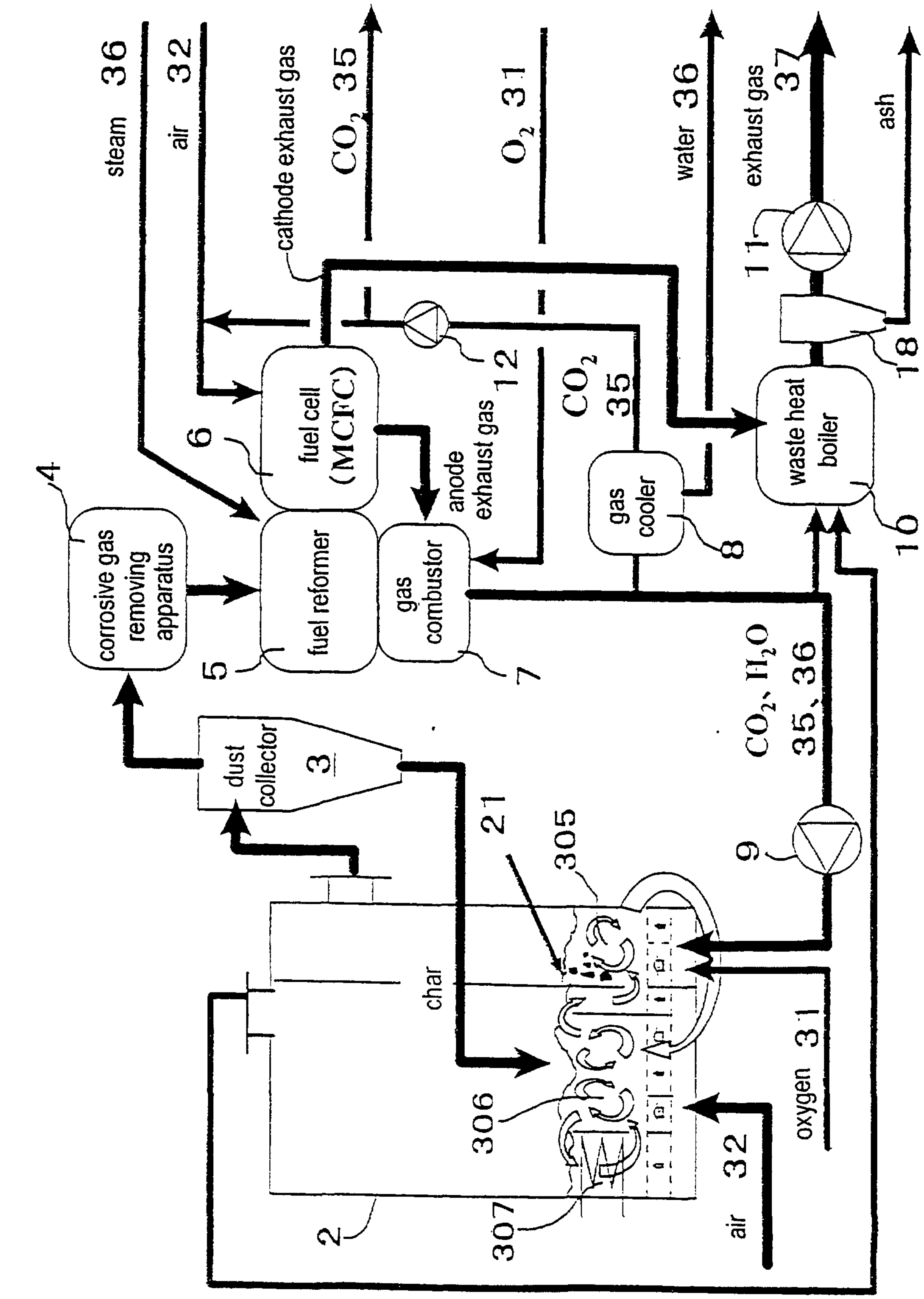
steam 36
air 32
cathode exhaust gas
$CO_2$ 35
$O_2$ 31
water 36
exhaust gas 37
ash
4
corrosive gas removing apparatus
6
fuel cell (MCFC)
5
fuel reformer
gas combustor
7
anode exhaust gas
12
$CO_2$ 35
gas cooler
8
waste heat boiler
10
11
18
dust collector
3
$CO_2$, $H_2O$ 35, 36
21
305
9
char
306
307
2
oxygen 31
air 32

FIG.11

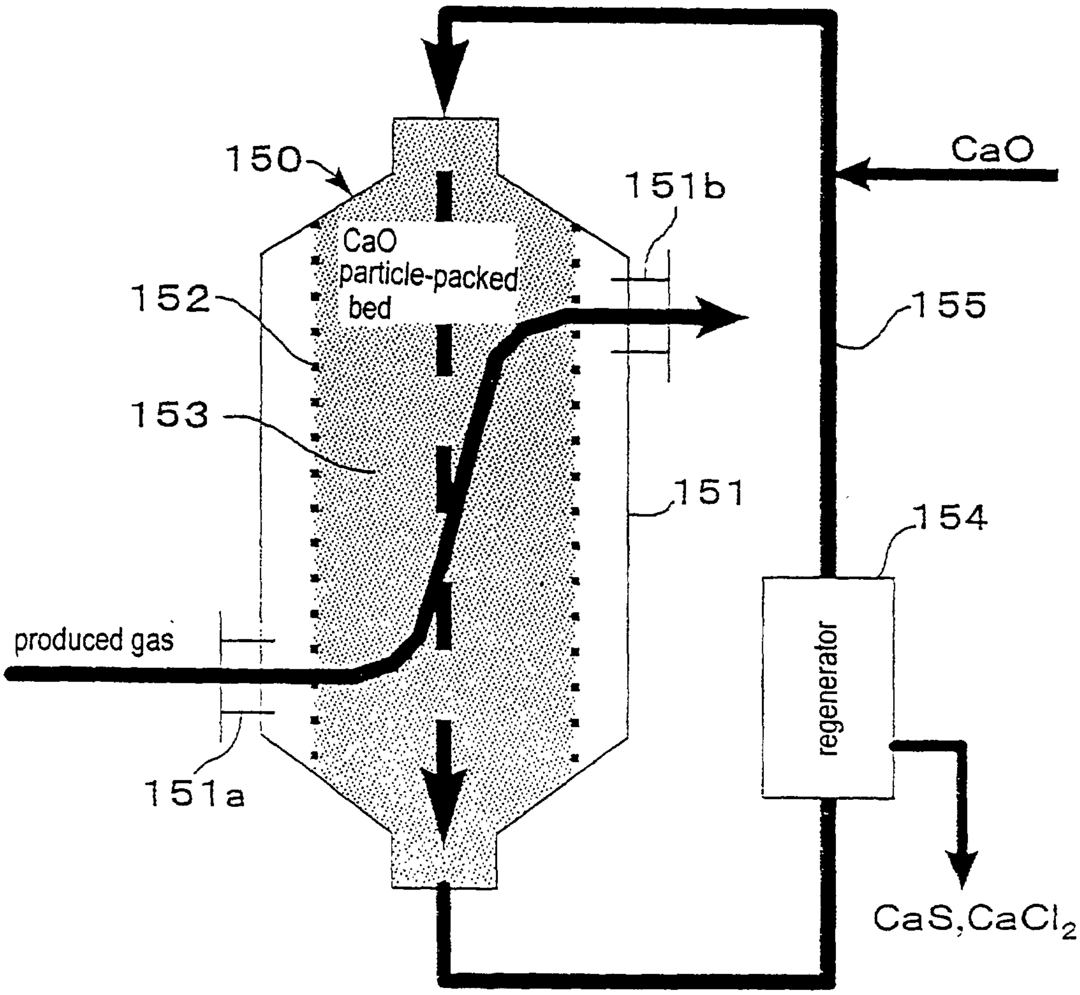
150
151b
CaO
particle-packed
bed
152
155
CaO
153
151
154
produced gas
regenerator
151a
CaS,CaCl2

*FIG.12*

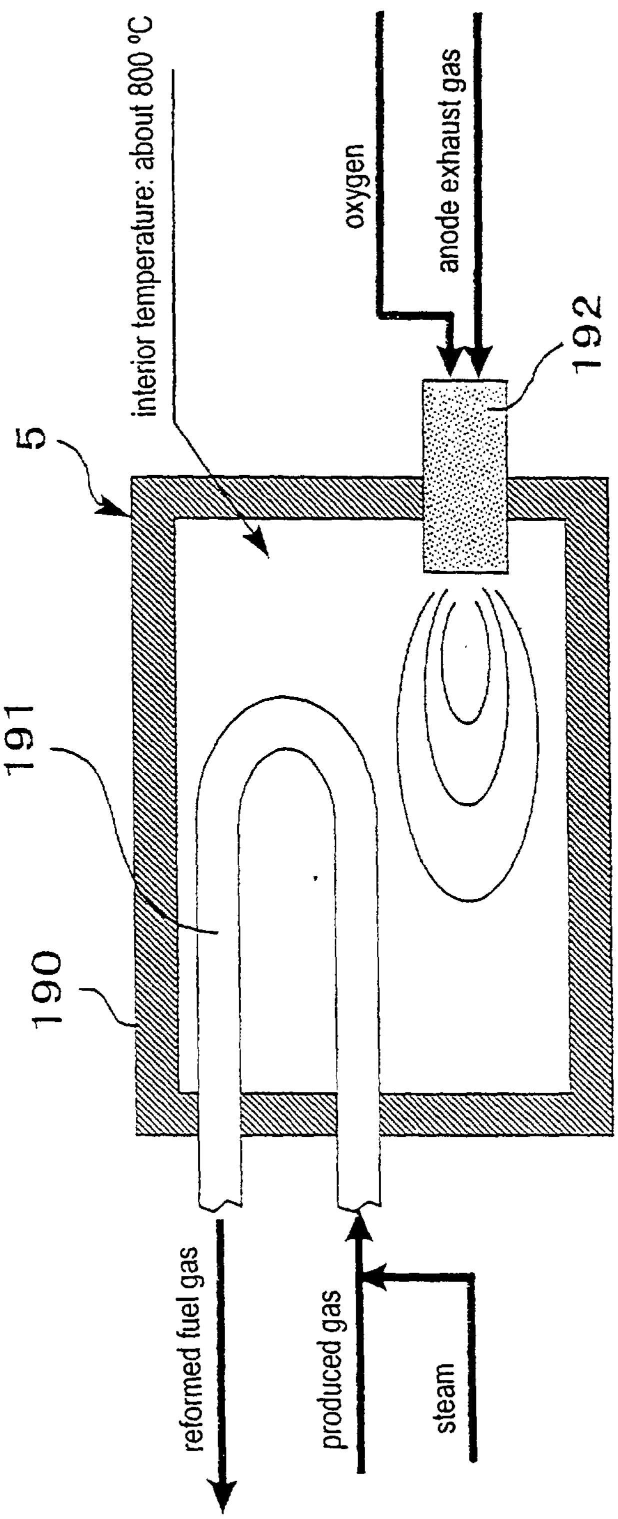
5
190
191
192
interior temperature: about 800 °C
oxygen
anode exhaust gas
reformed fuel gas
produced gas
steam

FIG.13

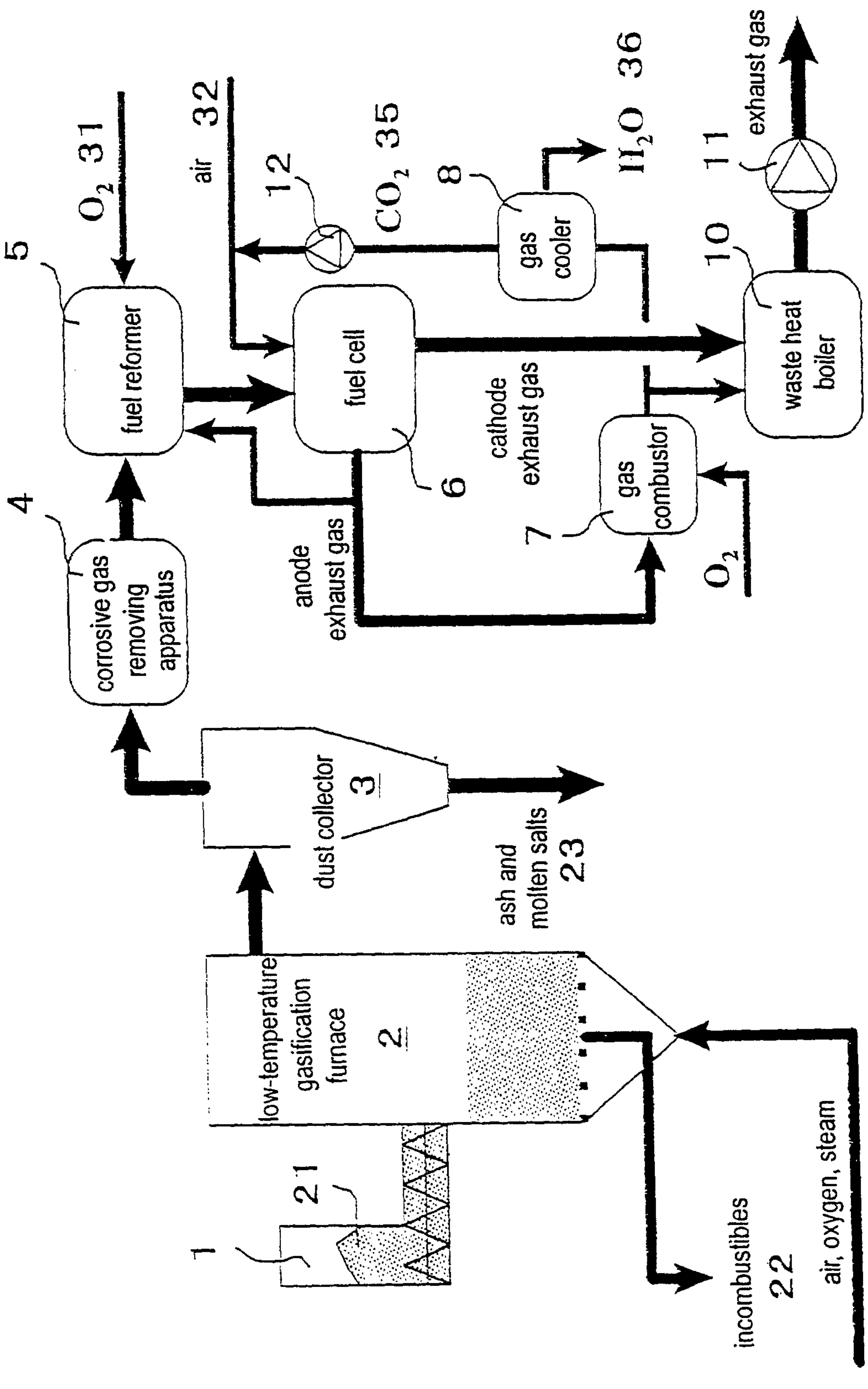
1
21
low-temperature gasification furnace
2
incombustibles
22
air, oxygen, steam
dust collector
3
ash and molten salts
23
corrosive gas removing apparatus
4
fuel reformer
5
$O_2$ 31
fuel cell
6
anode exhaust gas
air 32
12
$CO_2$ 35
cathode exhaust gas
gas combustor
7
$O_2$
gas cooler
8
$H_2O$ 36
waste heat boiler
10
11
exhaust gas

FIG.14

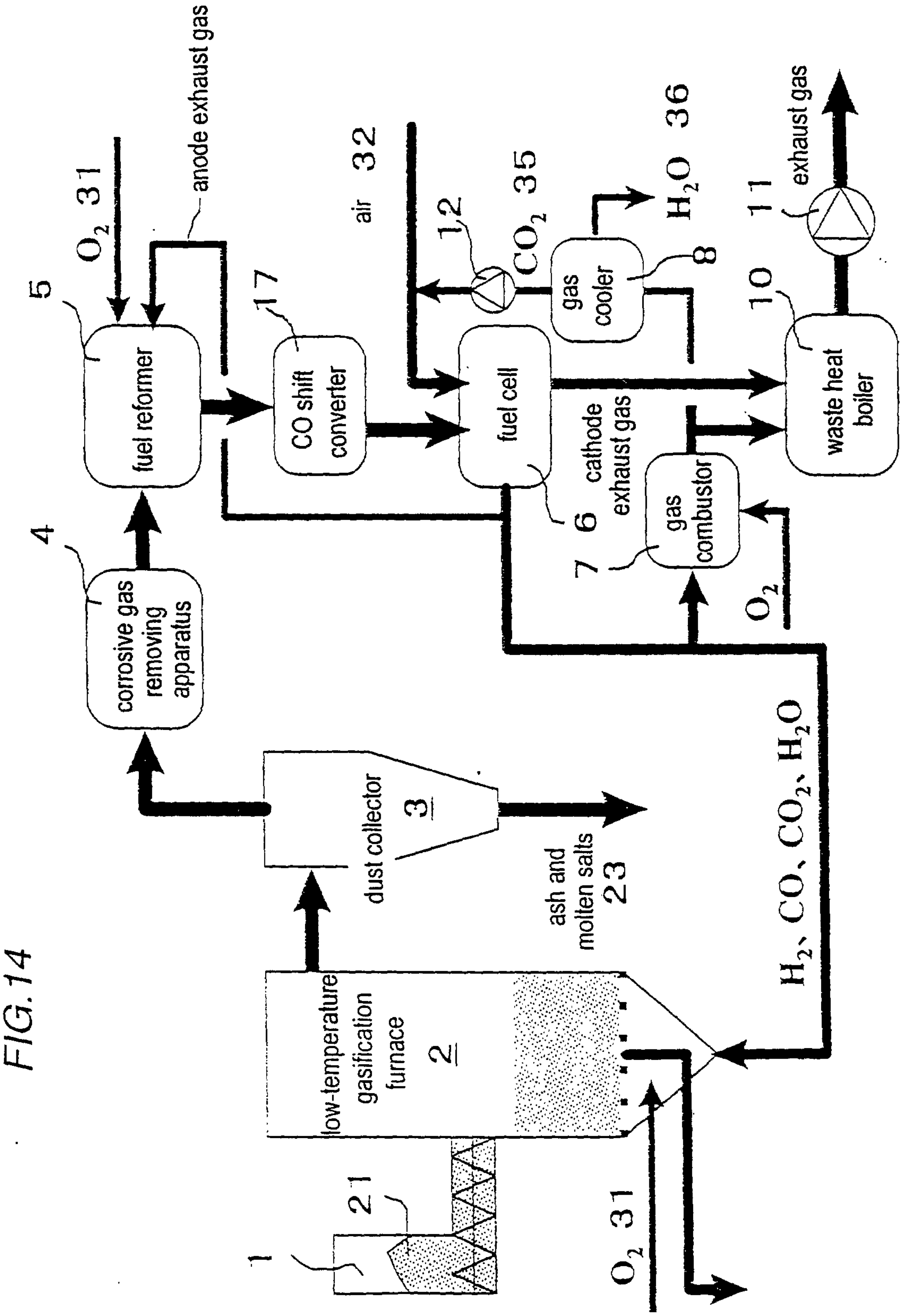
1
21
low-temperature gasification furnace
2
$O_2$ 31
dust collector
3
ash and molten salts
23
$H_2$、CO、$CO_2$、$H_2O$
corrosive gas removing apparatus
4
fuel reformer
5
$O_2$ 31
anode exhaust gas
CO shift converter
17
air 32
fuel cell
6
cathode exhaust gas
12
$CO_2$ 35
gas cooler
8
$H_2O$ 36
gas combustor
7
$O_2$
waste heat boiler
10
11
exhaust gas

FIG.15

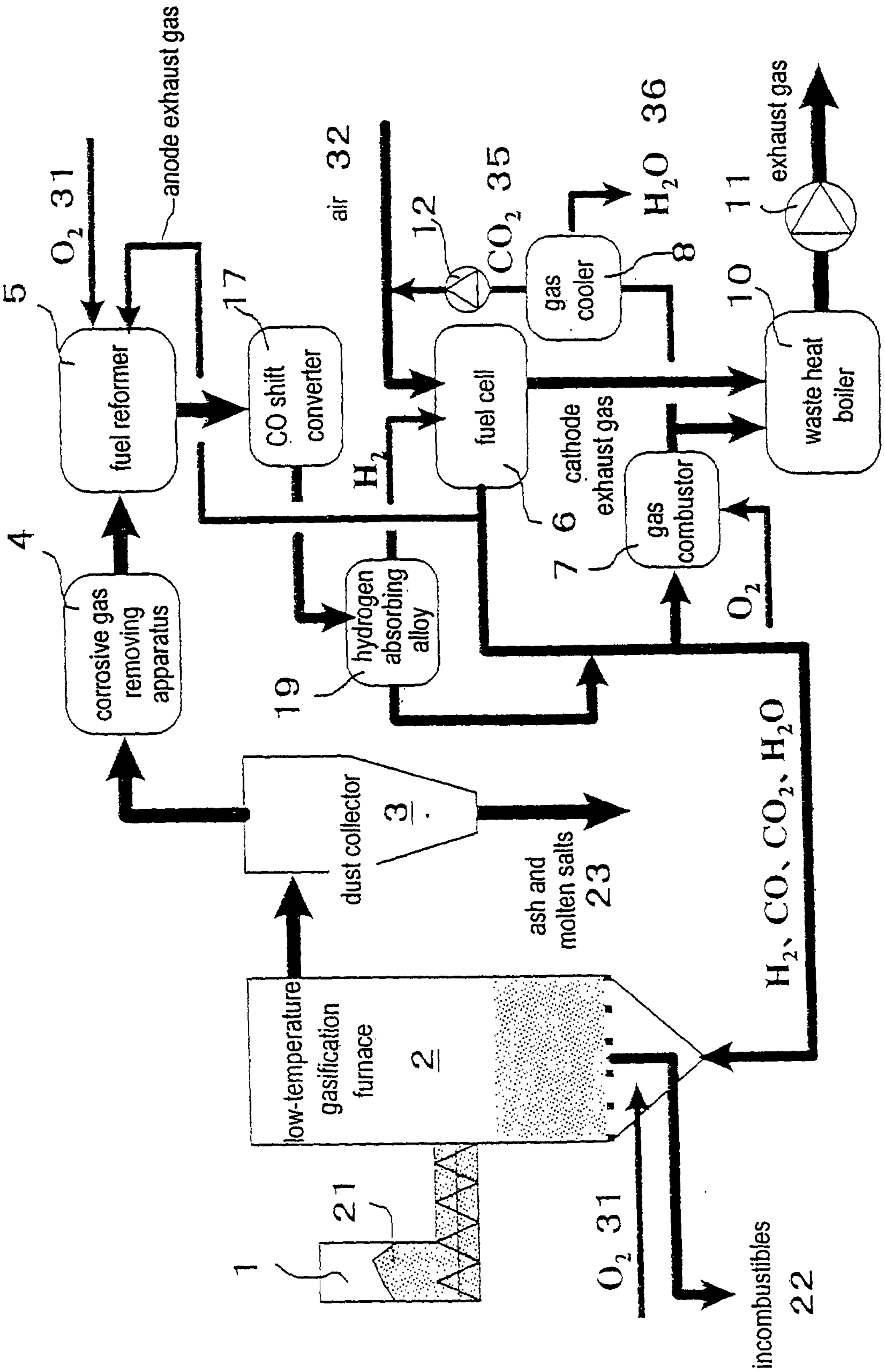

1
21
low-temperature gasification furnace
2
dust collector
3
ash and molten salts
23
corrosive gas removing apparatus
4
fuel reformer
5
O2 31
anode exhaust gas
CO shift converter
17
hydrogen absorbing alloy
19
H2
air 32
fuel cell
6
cathode exhaust gas
gas combustor
7
O2
12
CO2 35
gas cooler
8
H2O 36
waste heat boiler
10
11
exhaust gas
H2、CO、CO2、H2O
O2 31
incombustibles
22

*FIG.16*

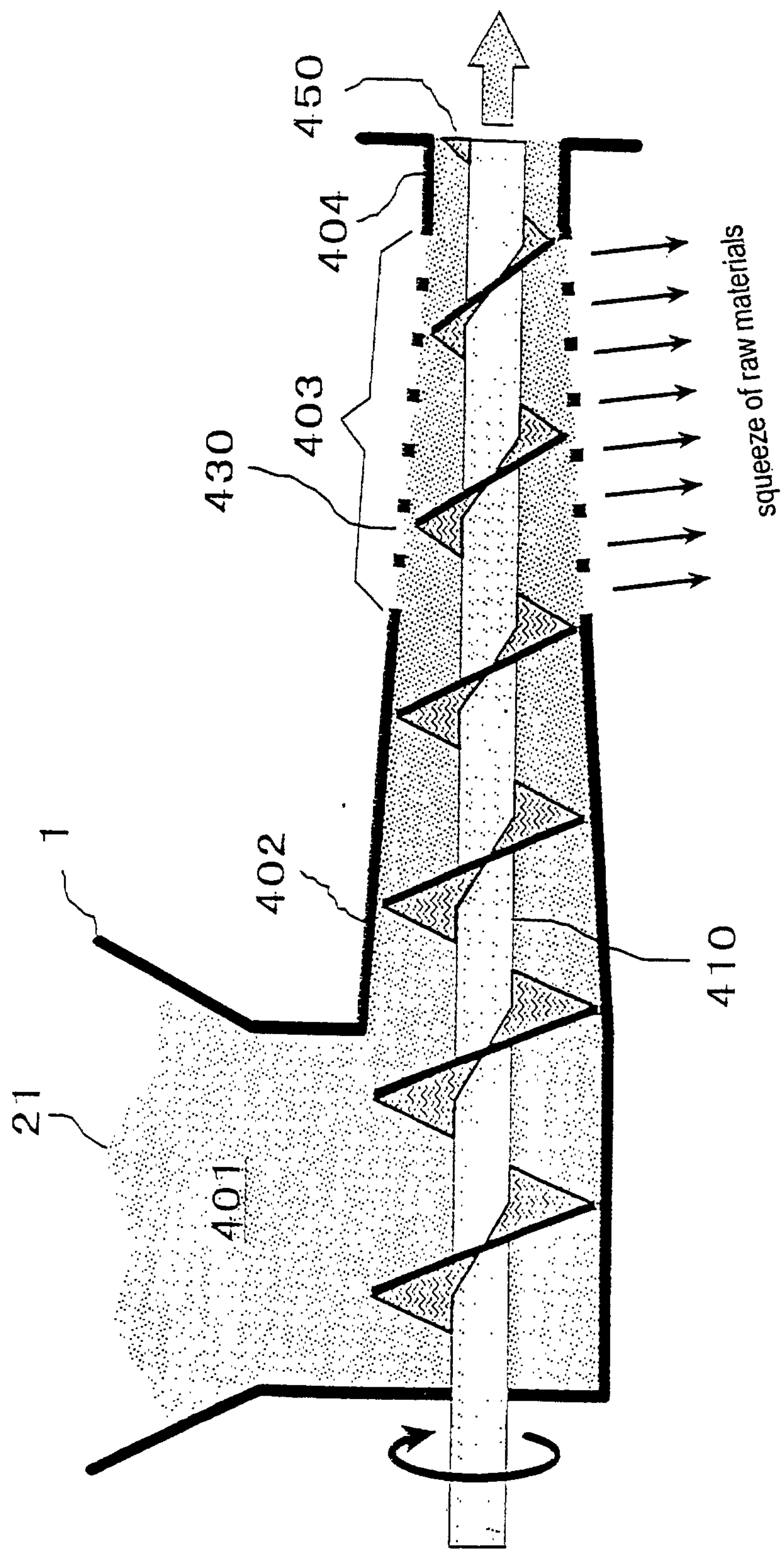

*FIG.17*

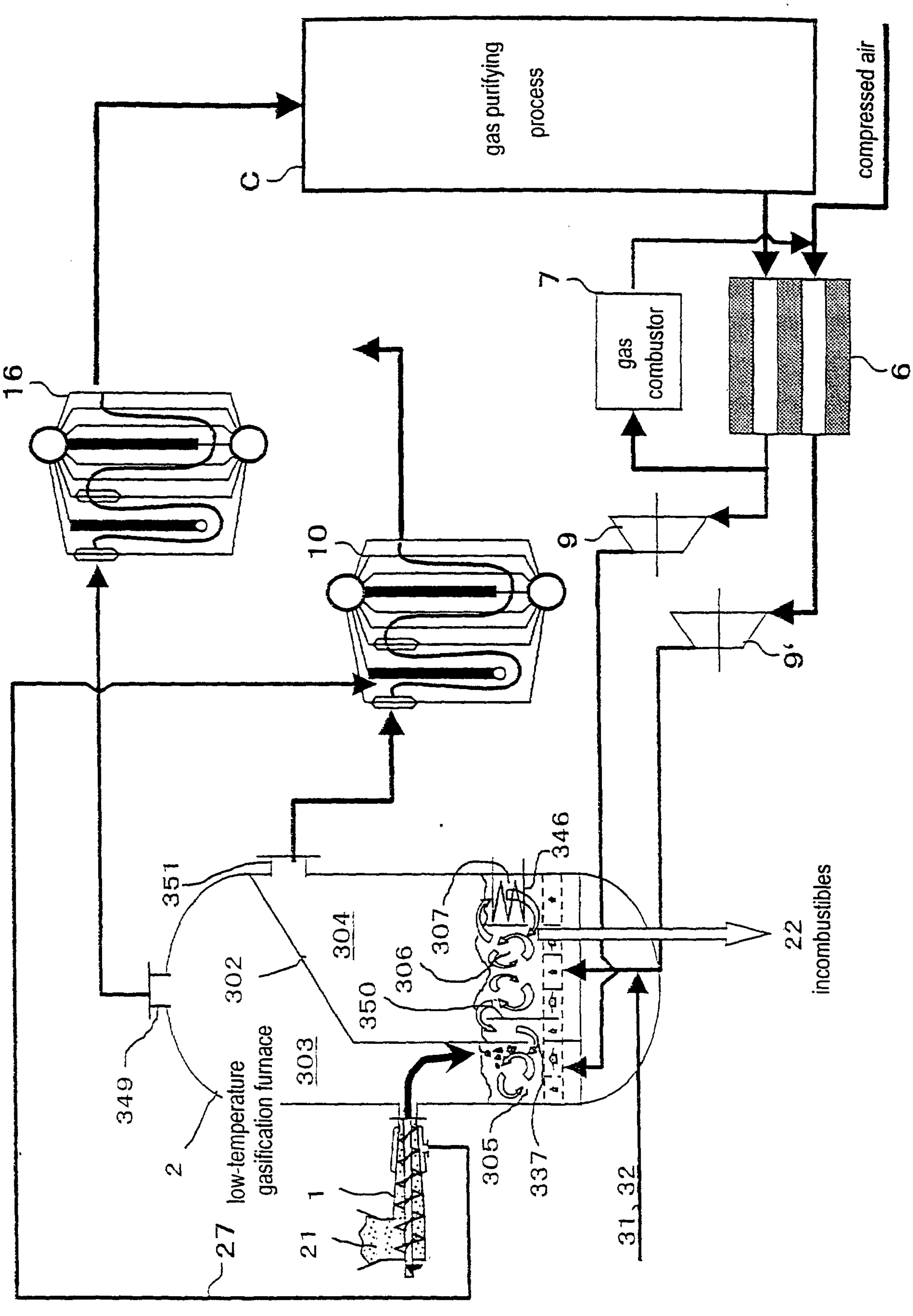
gas purifying process
C
compressed air
16
10
7
gas combustor
6
9
9'
351
349
302
304
303
350
306
307
346
2
low-temperature gasification furnace
1
21
27
305
337
31, 32
22
incombustibles

FIG.18

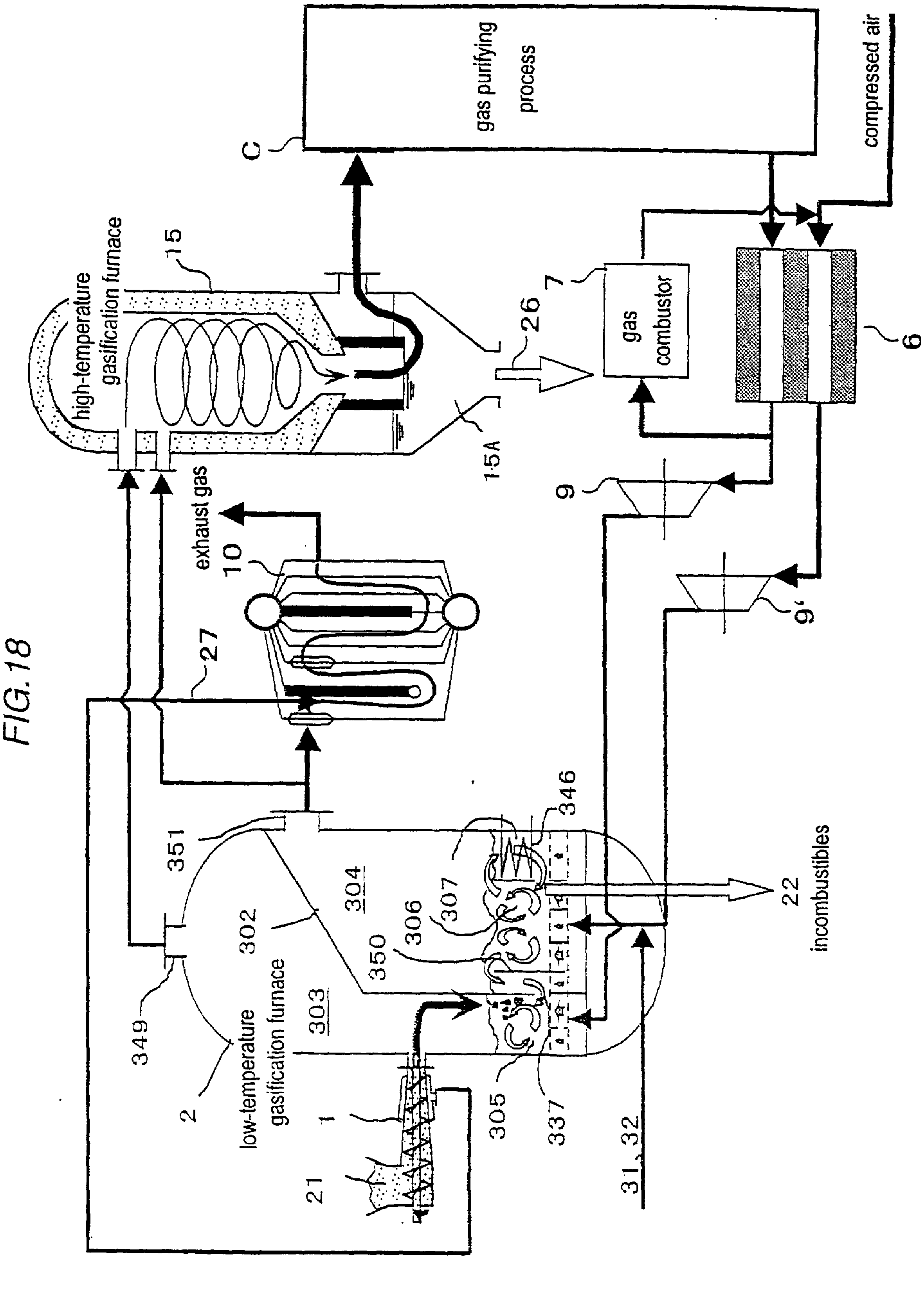

high-temperature gasification furnace
15
15A
26
C
gas purifying process
compressed air
7
gas combustor
6
9
9'
exhaust gas
10
27
351
349
2
low-temperature gasification furnace
302
303
304
350
306
307
346
305
337
1
21
31, 32
22
incombustibles

FIG.19

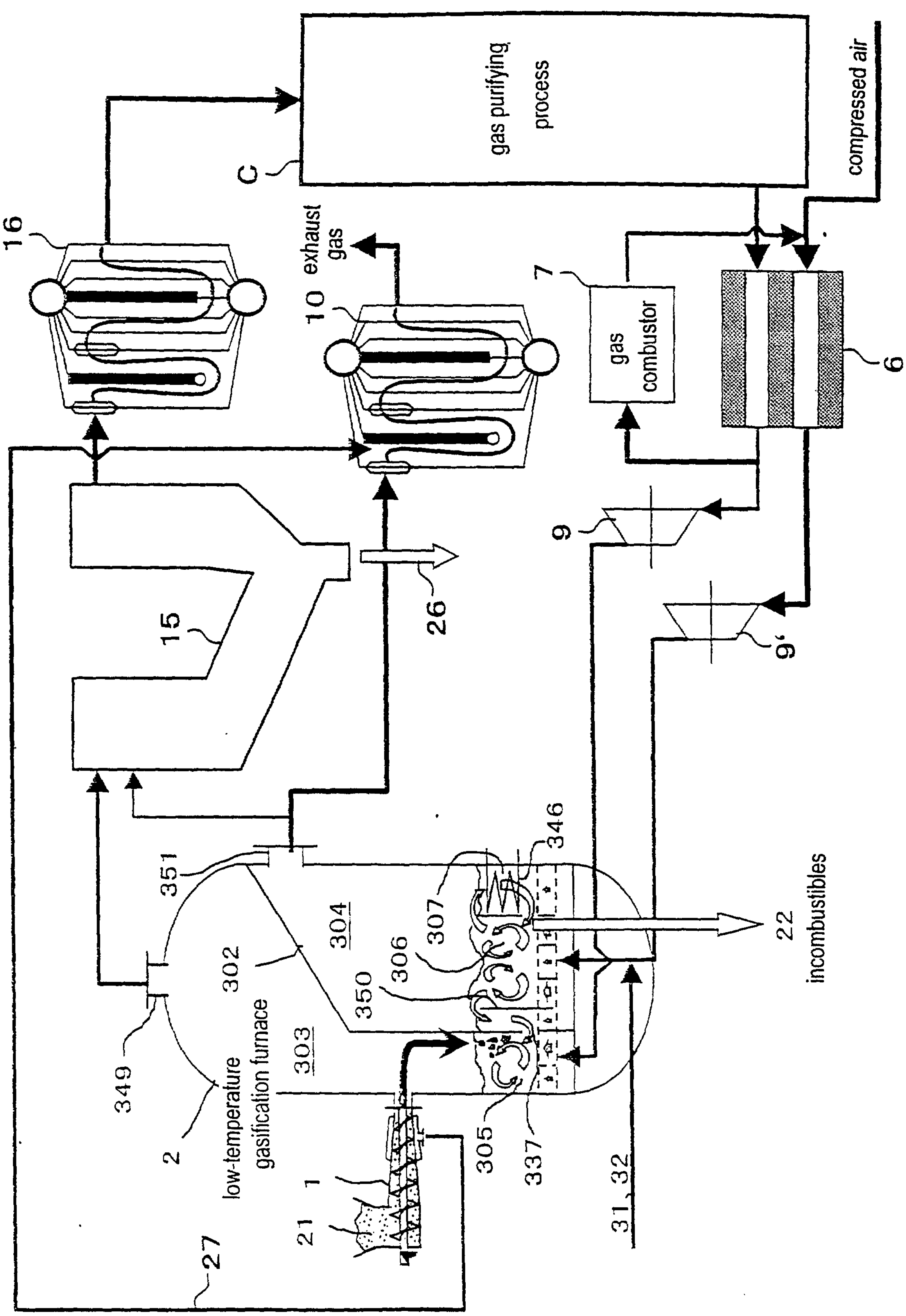
gas purifying process
C
compressed air
16
10
exhaust gas
7
gas combustor
6
15
9
9'
26
349
351
302
304
350
306
307
346
303
2
low-temperature gasification furnace
21
1
27
305
337
31, 32
22
incombustibles

FIG.20

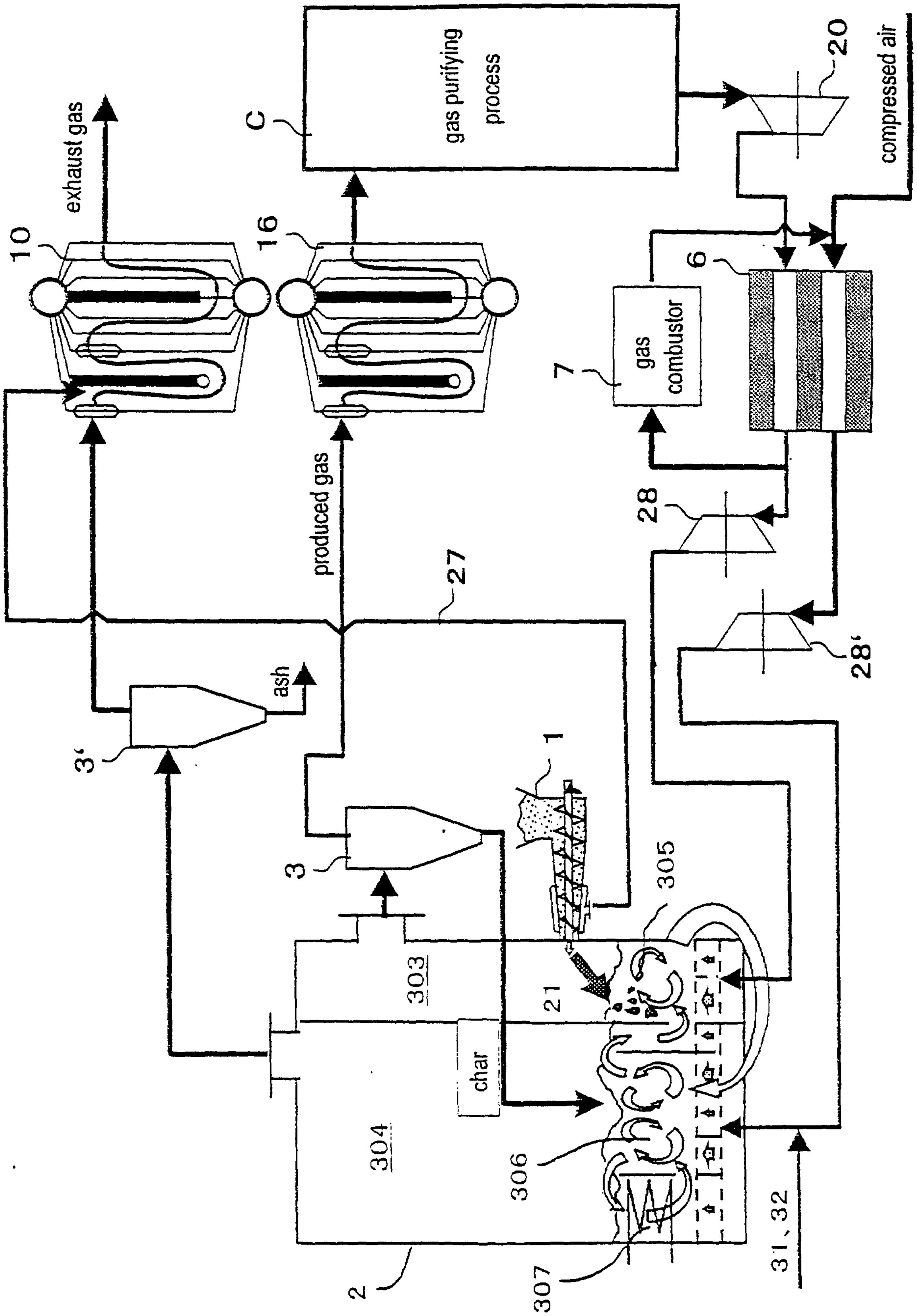
exhaust gas
10
16
C
gas purifying process
20
compressed air
6
7
gas combustor
produced gas
27
28
28'
ash
3'
3
1
305
303
21
char
304
306
307
2
31, 32

FIG.21

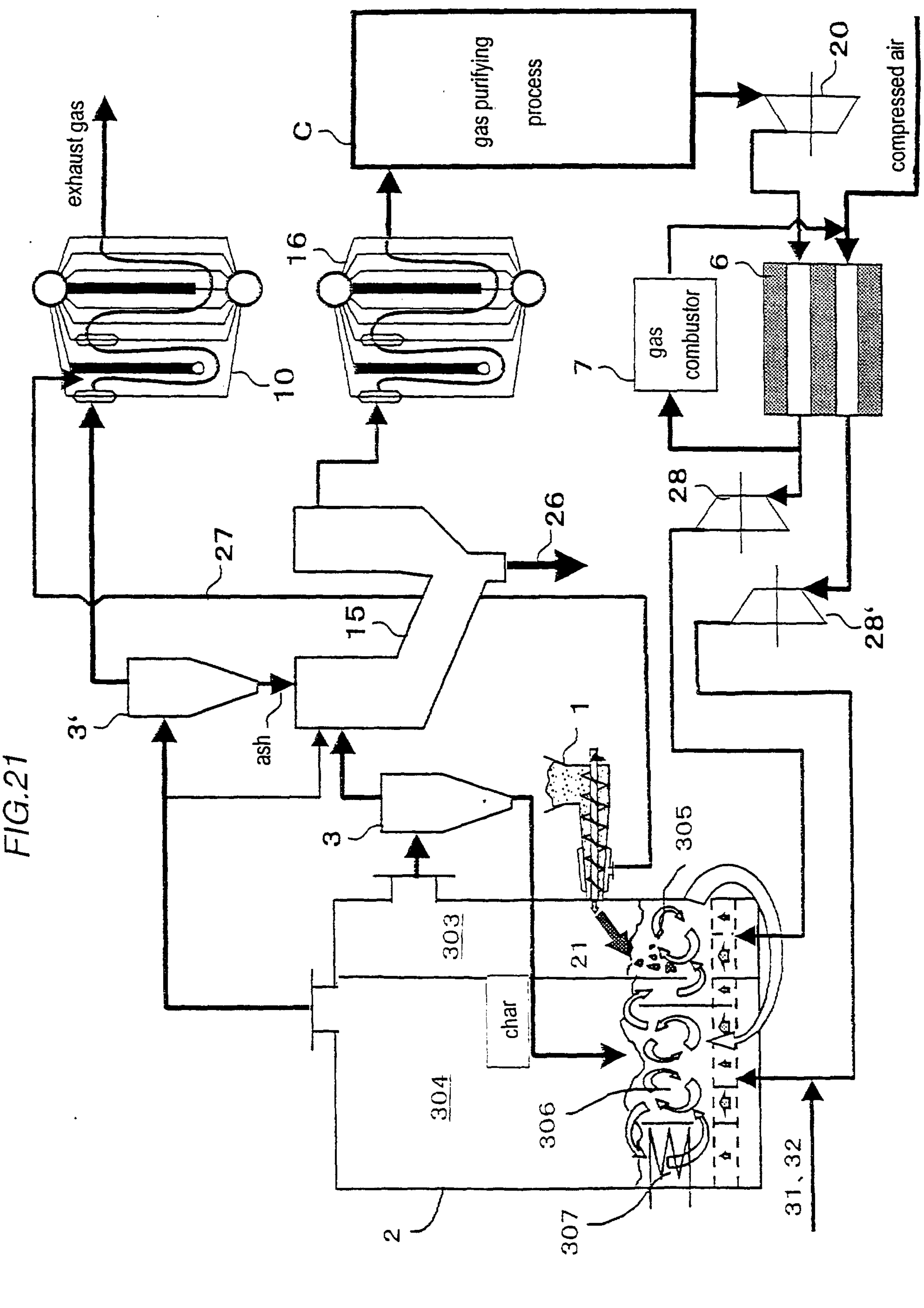
exhaust gas
C
gas purifying process
20
compressed air
16
10
6
7
gas combustor
28
28'
27
26
15
3'
ash
1
3
305
303
21
char
304
306
307
2
31, 32

FIG.22

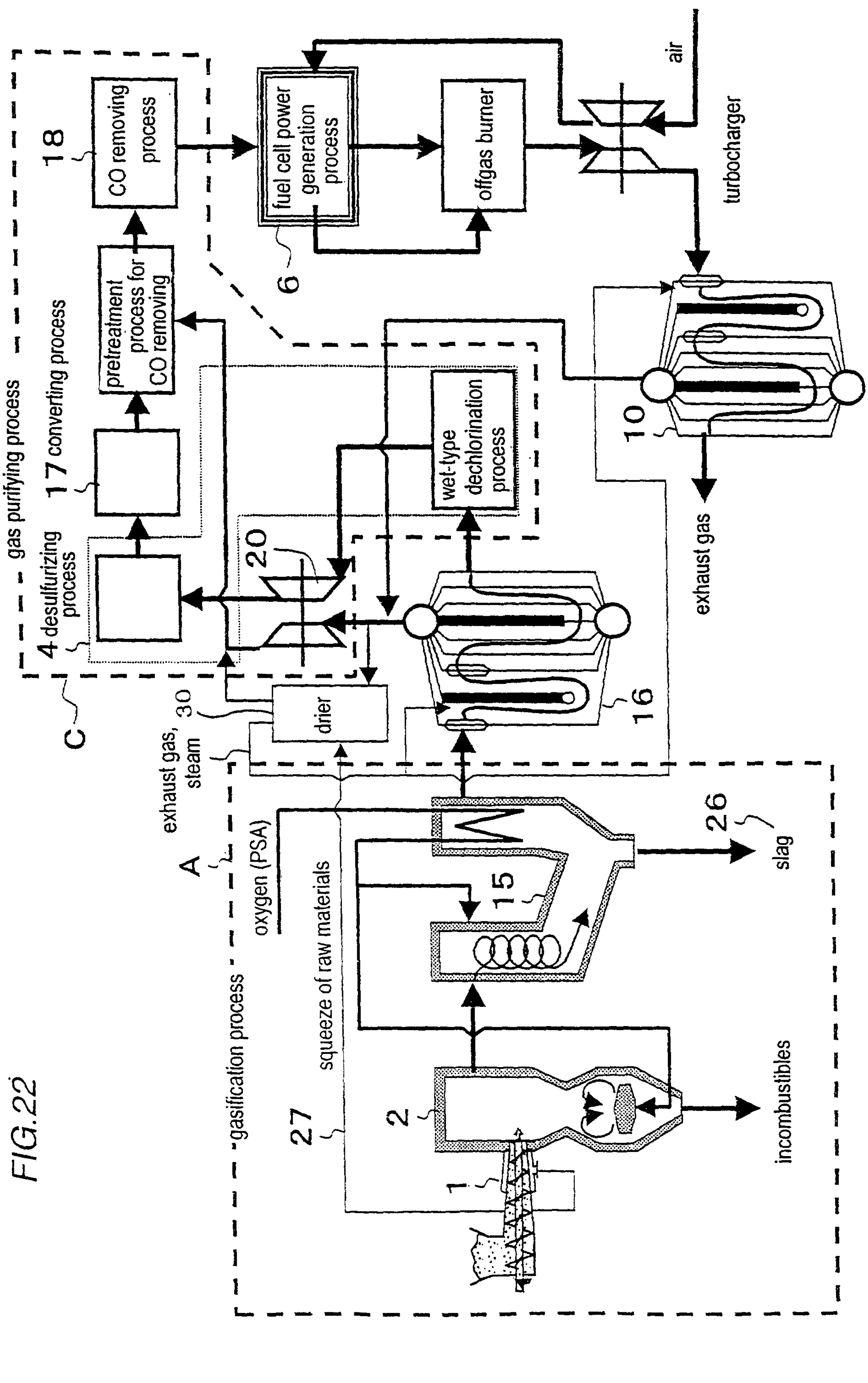
gas purifying process
C
4 desulfurizing process
17 converting process
pretreatment process for CO removing
18
CO removing process
20
wet-type dechlorination process
6
fuel cell power generation process
offgas burner
air
turbocharger
10
exhaust gas
30
drier
exhaust gas, steam
16
A
gasification process
oxygen (PSA)
squeeze of raw materials
15
26
slag
27
2
1
incombustibles

FIG.23

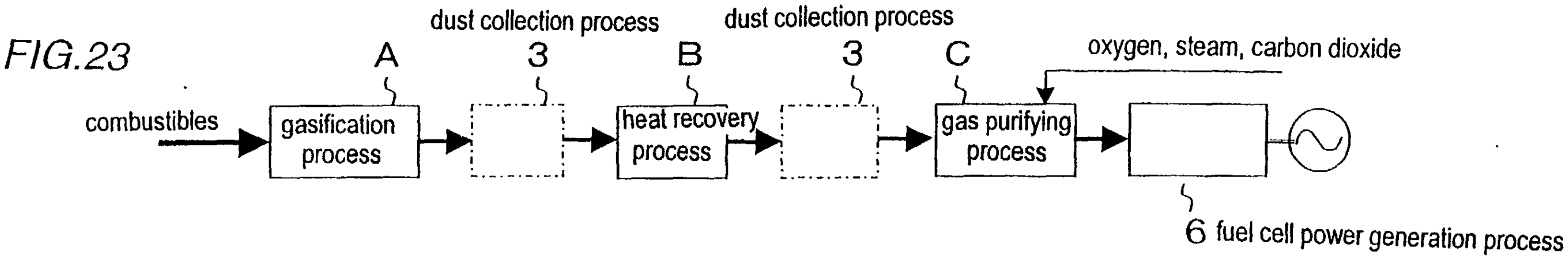


FIG.24

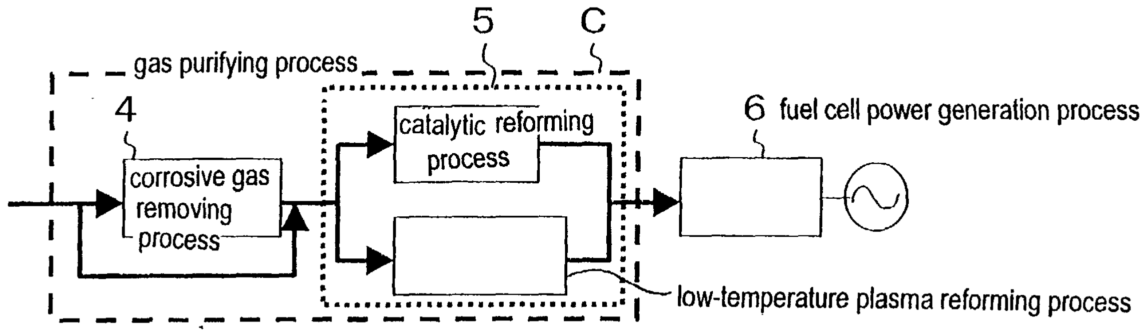


FIG.25

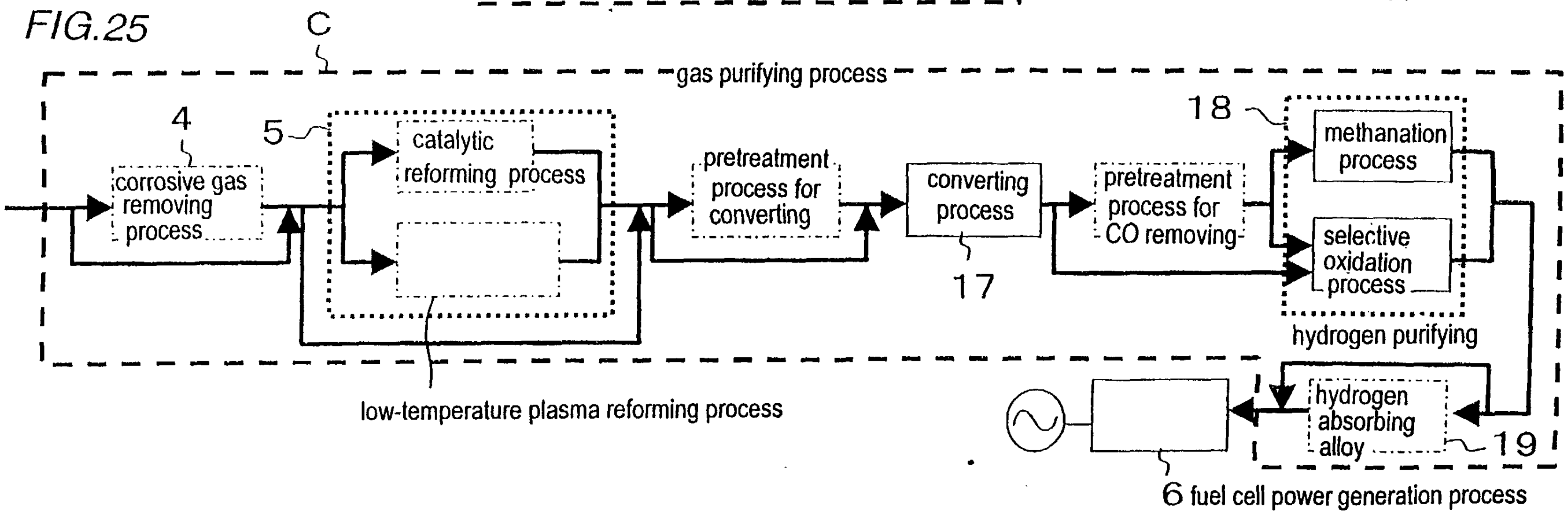

## INTERNATIONAL SEARCH REPORT

International application No.
PCT/JP99/06185

A. CLASSIFICATION OF SUBJECT MATTER
Int.Cl$^7$ C10J3/00, H01M8/06

According to International Patent Classification (IPC) or to both national classification and IPC

B. FIELDS SEARCHED

Minimum documentation searched (classification system followed by classification symbols)
Int.Cl$^7$ C10J3/00, H01M8/06

Documentation searched other than minimum documentation to the extent that such documents are included in the fields searched

Electronic data base consulted during the international search (name of data base and, where practicable, search terms used)
WPI/L(QUESTEL))

C. DOCUMENTS CONSIDERED TO BE RELEVANT

| Category* | Citation of document, with indication, where appropriate, of the relevant passages | Relevant to claim No. |
|---|---|---|
| P,A | JP, 10-310783, A (EBARA CORPORATION), 24 November, 1998 (24.11.98) (Family: none) | 1-44 |
| Y | US, 5509264, A (Kawasaki Jukogyo K.K.), 23 April, 1996 (23.04.96) & JP, 7-4260, A | 1-44 |
| Y | US, 5347068, A (Energiewerke Schwarze Pumpe AG), 13 September, 1994 (13.09.94) & JP, 5-202371, A & DE, 4125521, C | 1-44 |
| Y | JP, 10-236801, A (EBARA CORPORATION), 08 September, 1998 (08.09.98) (Family: none) | 1-44 |
| Y | JP, 10-294119, A (Ishikawajima-Harima Heavy Ind. Co., Ltd.), 04 November, 1998 (04.11.98) (Family: none) | 1-44 |
| Y | JP, 7-233379, A (Toshiba Corporation), 05 September, 1995 (05.09.95) (Family: none) | 1-2,8,30,42 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 February, 2000 (01.02.00) | |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP99/06185

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 10-167701, A (Matsushita Electric Ind. Co., Ltd.), 23 June, 1998 (23.06.98) (Family: none) | 1-2,4-6,19, 28 |
| Y | JP, 3-33191, A (Fuji Electric Co., Ltd.), 13 February, 1991 (13.02.91) (Family: none) | 15 |
| Y | JP, 6-279769, A (Nippon Steel Corporation), 04 October, 1994 (04.10.94) (Family: none) | 18,33 |
| Y | JP, 9-306531, A (Toyota Motor Corporation), 28 November, 1997 (28.11.97) (Family: none) | 17 |
| Y | JP, 8-250144, A (Toshiba Corporation), 27 September, 1996 (27.09.96) (Family: none) | 27,29 |
| Y | JP, 8-338260, A (Tokyo Gas K.K.), 24 December, 1996 (24.12.96) (Family: none) | 29 |
| Y | JP, 10-245202, A (THE JAPAN STEEL WORKS, LTD.), 14 September, 1998 (14.09.98) (Family: none) | 29 |
| Y | JP, 4-81526, A (Mitsubishi Heavy Industries, Ltd.), 16 March, 1992 (16.03.92) (Family: none) | 40,41 |
| Y | EP, 246649, A1 (HITACHI, LTD), 21 May, 1987 (21.05.87), & JP, 62-274563, A & US, 4743516, A | 43 |
| Y | JP, 61-107668, A (Kawasaki Heavy Industries, Ltd.), 26 May, 1986 (26.05.86) (Family: none) | 44 |

Form PCT/ISA/210 (continuation of second sheet) (July 1992)